# EUROPÄISCHE PATENTANMELDUNG

(11) **EP 4 806 309 A1**
(43) Veröffentlichungstag der Anmeldung: **16.09.2026**
(21) Anmeldenummer: 26157332.3
(22) Anmeldetag: 09.02.2026
(51) Int. Cl.: A47J 31/36, A47J 31/44, A47J 31/46, A47J 31/60

(54) **HYDRAULISCHE BRÜHEINHEIT MIT GESTEUERT UMGEHBAREM CREMAVENTIL SOWIE GETRÄNKEZUBEREITUNGSVORRICHTUNG MIT EINER SOLCHEN BRÜHEINHEIT UND VERFAHREN ZUM BETRIEB EINER BRÜHEINHEIT**

(30) Priorität: 11.03.2025 DE 102025109268
(71) Anmelder: Eugster/Frismag AG, 8580 Amriswil (CH)
(72) Erfinder: Riessbeck, Wolfgang, 8597 Landschlacht (CH); van de Löcht, Hendrik, 8580 Amriswil (CH)
(74) Vertreter: Patent- und Rechtsanwälte Behrmann Wagner PartG mbB

(57) **Zusammenfassung**

Brüheinheit für eine Getränkezubereitungsvorrichtung, insbesondere einen Kaffee- und/oder Espressovollautomaten, mit einer Antriebsmechanik zum Verschwenken und/oder linearen Verfahren einer Brühkammer zwischen mehreren Positionen, wobei die Brühkammer einen verschiebbar gegenüber einer Brühkammerwand gelagerten Brühkammerboden aufweist, wobei wenigstens ein Hydraulikzylinder vorgesehen ist, der den Brühkammerboden vor und/oder während der Getränkeherstellung in Richtung eines, die Brühkammer verschließenden Brühkopfes kraftbeaufschlagt, wobei die Antriebsmechanik eingerichtet ist, um die Brühkammerwand zur dichtenden Anlage am Brühkopf zu bringen, wobei einem Auslassventil, bevorzugt einem Cremaventil, ein Umgehungskanal zugeordnet ist, durch den Fluid das Auslassventil umgehen kann, insbesondere ohne, dass das Auslassventil in eine Öffnungsstellung überführt ist und das Auslassventil in eine Bypassstellung vorgespannt ist, in der der Umgehungskanal geöffnet ist

## Beschreibung

Die vorliegende Erfindung betrifft eine Brüheinheit für Getränkezubereitungsvorrichtungen, insbesondere Kaffee- und/oder Espressovollautomaten mit den Merkmalen des Oberbegriffs des Anspruchs 1. Die Erfindung betrifft weiterhin eine Getränkezubereitungsvorrichtung, insbesondere einen Kaffee- und/oder Espressovollautomaten mit den Merkmalen des Oberbegriffs des Anspruchs 13. Weiterhin betrifft die vorliegende Erfindung ein Verfahren zum Betrieb einer Brüheinheit für eine Getränkezubereitungsvorrichtung, insbesondere einen Kaffee- und/oder Espressovollautomaten gemäß des Oberbegriffs des Anspruchs 14.

Aus dem Stand der Technik sind bereits eine Vielzahl von bevorzugt entnehmbaren, Brüheinheiten für Getränkezubereitungsvorrichtungen, insbesondere Kaffeevollautomaten und/oder Espressovollautomaten, bekannt.

Die Brüheinheiten unterscheiden sich im Wesentlichen nach der Art und Weise wie Getränkesubstratmehl zugeführt wird. Es besteht die Möglichkeit Getränkesubstratmehl, beispielsweise Kaffeebohnenmehl, lose oder portioniert, insbesondere verkapselt, bereitzustellen.

Im Bereich der Brüheinheiten für Getränkezubereitungsvorrichtungen, die mit losem Getränkesubstratmehl, insbesondere Kaffeebohnenmehl, ohne Verkapselung oder Portionsbehälter arbeiten, sind ebenfalls bereits unterschiedliche Konzepte bekannt. Ein weit verbreitetes Konzept ist die sogenannte "Kniehebelbrüheinheit", wobei der Begriff "Kniehebel" aus rein technischer Sicht für solche Brüheinheiten nicht vollkommen zutreffend ist.

Die Grundidee derartiger Brüheinheiten ist, dass eine Brühkammer durch Verschwenk- und/oder lineare Translationsbewegungen in unterschiedliche Positionen überführbar ist, wobei für die Durchführung eines Getränkebezugs oder eines Brühvorgangs wenigstens eine Mahlposition vorgesehen ist, in der die Brühkammer mit Getränkesubstratmehl befüllt wird oder befüllbar ist. Weiter ist eine Brühposition notwendig, in der die Brühkammer verschlossen ist und Brühfluid in die Brühkammer einströmt und aufgebrühtes oder hergestelltes Getränk aus der Brühkammer abfließen kann. Ferner ist bei sogenannten Vollautomaten eine Ausstoßposition erreichbar, die nach dem Brühvorgang oder Auslaugprozess angefahren wird und dazu dient, dass das in der Brühkammer befindliche Getränkesubstratmehl, welches nach dem Brühvorgang auch als Trester bezeichnet wird, aus der Brühkammer entnommen oder entfernt, bevorzugt von einem beweglichen Brühkammerboden abgestriffen wird.

Bei Halbautomaten oder sogenannten Siebträgermaschinen, die ebenfalls mit unverpacktem oder nicht portioniertem Getränkesubstratmehl arbeiten, können die vorgenannten Positionen teilweise nur erreicht werden, wenn der Bediener oder Benutzer tätig wird und den Siebträger bedient.

Für derartige Brüheinheiten, die beispielsweise zu Reinigungs- oder Wartungszwecken aus der zugehörigen Getränkezubereitungsvorrichtung entnommen und in diese eingesetzt werden können, bestehen Ansätze, die abgesehen von der Fluidführung des Brühfluids rein mechanisch ausgebildet sind. Dies führt jedoch dazu, dass die Brüheinheit insgesamt recht hohe Kräfte aufbringen und ableiten können muss, insbesondere um elastische Rückstellkräfte zu überwinden, die notwendig sind, um die Brüheinheit oder Teile der Brüheinheit, insbesondere die Brühkammer, zurückzustellen oder notwendige Betriebsdrücke, wie beispielsweise Tamperdrücke oder Brühdrücke, zu erreichen. Dementsprechend wird auch ein relativ starker Antrieb aufseiten der Getränkezubereitungsvorrichtung benötigt, der die rein mechanischen Brüheinheiten und dazugehörigen Antriebsmechaniken betätigt oder antreibt.

Wie bereits angedeutet besteht ein weiterer Grund, weshalb hohe Kräfte in rein mechanisch angetriebenen Brüheinheiten auftreten, in dem Umstand, dass gerade während des Brühprozesses sichergestellt werden muss, dass dem relativ hohen Innendruck innerhalb der Brühkammer entsprechend große entgegengesetzt gerichtete äußere Kräfte entgegenwirken, um die Brühkammer verschlossen zu halten oder auch um das Brühkammervolumen während des Brühprozesses konstant zu halten oder nur minimal zu vergrößern.

Um bei derartigen, rein mechanischen Brüheinheiten den Fluidverbrauch, insbesondere im Rahmen eines Spülprozesses, zu reduzieren ist in der DE 10 2020 117 390 A1 der Anmelderin eine Lösung vorgeschlagen, in der ein Auslassventil einer Brühkammer zwangsgesteuert ist und somit das Auslassventil über eine mechanische Betätigung kurzgeschlossen oder umgangen werden kann. In dieser Lösung sind aber auch zum Umgehen des Auslassventils sehr hohe Kräfte notwendig, Das Ventil verharrt ohne äußere Einflüsse in einer geschlossen Stellung mit geschlossener Umgehung

Aus dem Stand der Technik sind ebenfalls bereits Ansätze von Brüheinheiten bekannt, bei denen zusätzlich zur Fluidführung des Brühfluids hydraulische Komponenten genutzt werden, um die Verstellung der Brüheinheit zwischen den unterschiedlichen Positionen zu bewirken oder zu unterstützen. Derartige Ansätze sind aber weitgehend auf Kapselsysteme oder Siebträgersysteme beschränkt und lassen sich nicht ohne weiteres auf andere Typen oder Gattungen übertragen. Über hydraulische Komponenten lassen sich gewisse Vorteile erreichen. Gleichzeitig neigen hydraulische Komponenten jedoch zu einem erhöhten Steuerungsbedarf oder Steueraufwand, da in derartigen Brüheinheiten nicht nur eine mechanische Antriebsmechanik betrieben werden muss, sondern auch zu gewissen Zeiten im Brühvorgang oder ähnlichen Vorgängen, wie beispielsweise Spül- oder Reinigungsprozessen, auch die hydraulischen Komponenten entsprechend angesteuert werden müssen und insbesondere mit Hydraulikfluid beaufschlagt, belüftet oder entleert werden müssen. Weiterhin sind hydraulische Komponenten insofern eher nachteilig, da sie in der Regel den Fluidverbrauch der Brüheinheit und damit der Getränkezubereitungsvorrichtung erhöhen. Da jedoch wie oben bereits erwähnt, die Reduktion von Fluidverbrauch grundsätzlich erwünscht ist - um ein Fluidvorrat möglichst effektiv zu nutzen und möglichst wenig Restwasser zu erzeugen - sind bisher nur sehr begrenzt hydraulische Komponenten zur Anwendung gekommen.

Ausgehend von diesem Stand der Technik ist es die Aufgabe der vorliegenden Erfindung eine Brüheinheit, eine Getränkezubereitungsvorrichtung, mit einer, bevorzugt entnehmbaren, Brüheinheit sowie ein Verfahren zum Betrieb einer Brüheinheit vorzuschlagen, die die Nachteile im Stand der Technik überwinden und insbesondere sowohl die Integration von hydraulischen Komponenten ermöglichen, gleichzeitig jedoch den Fluidverbrauch nicht erhöhen, sondern bestenfalls sogar weiter verringern.

Diese Aufgabe wird im Hinblick auf eine Brüheinheit für eine Getränkezubereitungsvorrichtung mit den Merkmalen des Anspruchs 1 gelöst. Bezüglich der Getränkezubereitungsvorrichtung wird die Aufgabe mit den Merkmalen des Anspruchs 11 gelöst. Im Hinblick auf ein Verfahren zum Betrieb einer Brüheinheit wird die Aufgabe mit den Merkmalen des Anspruchs 13 gelöst.

Vorteilhafte Ausführungsformen der Erfindung sind Gegenstand der nachfolgenden Beschreibung, der Figuren, der Figurenbeschreibung sowie der Zeichnungen.

Insgesamt sollen, auch zur Vermeidung von unnötigen Wiederholungen, alle nachfolgend vorrichtungsmäßig offenbarten Merkmale auch als entsprechend verfahrensmäßig offenbart und beanspruchbar gelten, sowie umgekehrt.

Die Brüheinheit gemäß der vorliegenden Erfindung, welche zum Einsatz mit oder in einer Getränkezubereitungsvorrichtung, insbesondere einem Kaffee- und/oder Espressovollautomaten, geeignet ist umfasst eine Antriebsmechanik zum Verschwenken und/oder linearen Verfahren einer Brühkammer zwischen mehreren Positionen, wobei die Brühkammer einen verschiebbar gegenüber einer Brühkammerwand gelagerten Brühkammerboden aufweist, wobei wenigstens ein Hydraulikzylinder vorgesehen ist, der den Brühkammerboden vor und/oder während der Getränkeherstellung in Richtung eines, die Brühkammer verschließenden Brühkopfes kraftbeaufschlagt, wobei die Antriebsmechanik eingerichtet ist, um die Brühkammerwand zur dichtenden Anlage am Brühkopf zu bringen.

Erfindungsgemäß ist dabei vorgesehen, dass einem Auslassventil, bevorzugt einem Cremaventil, ein Umgehungskanal zugeordnet ist, durch den Fluid das Auslassventil umgehen kann, insbesondere ohne, dass das Auslassventil in eine Öffnungsstellung überführt ist, und das Auslassventil in eine Bypassstellung vorgespannt ist, in der der Umgehungskanal geöffnet ist.

Mit anderen Worten ausgedrückt, sieht die Erfindung vor, dass das Auslassventil in Anlehnung an die Begrifflichkeit eines « normalerweise geöffneten Ventils (normally open valve) ein normalerweise umgehbares Auslassventil ist. Das bedeutet, dass ohne zusätzliche Einwirkung auf das Auslassventil und/oder den Umgehungskanal, die die Vorspannung des Auslassventils in die Bypassstellung überwindet oder kompensiert, das Auslassventil umgehbar ist. Dadurch folgt vorteilhaft auch, dass das Auslassventil, um seine eigentliche Ventilfunktion - nämlich zum Steuern eines Ventilflusses als Ausgang aus der Brühkammer - ausführen zu können, zunächst die Bypassstellung verlassen muss und der Umgehungskanal geschlossen oder verschlossen werden muss.

Dadurch werden verschiedene Vorteile erreicht. Einerseits kann in unterschiedlichen Betriebssituationen eine Entspannung oder Belüftung der Brühkammer entfallen, da das Auslassventil ohnehin normalerweiseumgehbar ist. Außerdem kann die Hygiene verbessert werden, da - wie weiter unten noch im Detail beschrieben wird - über das normalerweise-umgehbare Auslassventil eine Rücksaugfunktion von Fluid jenseits des Auslassventils zurück in die Brühkammer ermöglicht wird. Außerdem verstärkt es die Vorteile der Integration von hydraulischen Komponenten, insbesondere des wenigstens einen Hydraulikzylinders. Denn anders als im Stand der Technik kann das Öffnen und Verschließen des Umgehungskanals mit minimalen Kräften erfolgen, so dass auch hierfür kein starker Antrieb benötigt wird.

Das Auslassventil kann vorteilhaft als Gegendruckventil ausgebildet sein, dass - sofern der Umgehungskanal geschlossen ist - als normalerweise geschlossenes Ventil ausgebildet ist und nur einen Fluidfluss ermöglicht, wenn ein entsprechender Druck oder Überdruck in der Brühkammer vorherrscht.

Im Rahmen der Erfindung soll Fluid bevorzugt als wasserbasierte oder wässrige Flüssigkeiten verstanden werden. Dabei kann es sich beispielsweise um Spülwasser, wässrige Reinigungsflüssigkeit, Brühwasser, Hydraulikwasser, aufgebrühtes wasserbasiertes Getränk oder dergleichen handeln.

In einer ersten vorteilhaften Ausführungsform kann vorgesehen sein, dass die Antriebsmechanik zum Erreichen einer Schließposition, bevorzugt einer ersten Spülposition der Brühkammer, eingerichtet ist, wobei in der Schließposition dir Brühkammerwand dichtend an dem Brühkopf anliegt und das Auslassventil, insbesondere ein Cremaventil, des Brühkopfes über den Umgehungskanal umgehbar ist, sodass, insbesondere während einer Spülung des Brühkammer, kein Innendruck in der verschlossenen Brühkammer aufbaubar ist.

Dadurch wird vorteilhaft erreicht, dass es auch bei hydraulischen oder teilhydraulischen Brüheinheiten trotz entsprechendem Vorurteil grundsätzlich sinnvoll sein kann die verschlossene Brühkammer durch ein Kurzschließen oder Umgehen eines Auslassventils, insbesondere eines Cremaventils, zu belüften, um beispielsweise, aber keinesfalls ausschließlich, eine Spülung mit einem minimalen Spülvolumen zu ermöglichen. Grundsätzlich würde man von der Annahme ausgehen, dass eine zusätzliche hydraulische Verstellung der Brühkammer und/oder des Brühkammerbodens zur Durchführung eines Spülprozesses der Brühkammer ein Mehrverbrauch von Hydraulikfluid verursachen würde und daher keine Vorteile, sondern eher Nachteile verursachen würde, insbesondere aber gerade nicht zu den aus dem Stand der Technik bekannten Vorteilen führen würde, nämlich zur Reduktion von Fluidverbrauch oder Wasserverbrauch, da mit einem erhöhten Verbrauch an Hydraulikfluid zu rechnen gewesen wäre.

In besonders vorteilhafter Weise hat die Erfindung zusätzlich erreicht, dass die Schließposition der Brühkammer, die zur dichtenden Anlage der Brühkammerwand am Brühkopf und damit zu einer geschlossenen Brühkammer führt, gleichzeitig aber die Umgehbarkeit des Auslassventils über den Umgehungskanal ermöglicht, einzig und allein durch die Antriebsmechanik erreicht oder bereitgestellt werden kann und damit, anders als im Stand der Technik, vom Befüllungszustand der Brühkammer mit Getränkesubstratmehl unabhängig ist.

Wie nachfolgend noch erläutert, kann die Schließposition, bevorzugt als erste Spülposition verwendet werden oder genutzt werden, in der nur geringste Reste von Getränkesubstratmehl in der Brühkammer zu erwarten sind. Es können jedoch auch andere Situationen in dem Brühprozess, in einem Spülprozess oder einem Reinigungsprozess der Brüheinheit integriert werden, in denen es sinnvoll sein kann, unabhängig vom Beladungszustand der Brühkammer das Auslassventil über den Umgehungskanal kurzzuschließen, um somit einen Druck, Gegendruck und/oder Innendruck im Inneren der Brühkammer abzubauen oder den Aufbau eines solchen Drucks zu verhindern. Weiterhin kann, wie unten noch im Detail ausgeführt, die Schließposition der Brühkammer, die zwar eine geschlossene Brühkammer im Hinblick auf die dichtende Anlage des Brühkopfes an der Brühkammerwand ermöglicht, auch genutzt werden, um die Brühkammer als Saugkammer oder gar als Unterdruckkammer zu verwenden, wenn nämlich über eine Vergrößerung der Brühkammer, bevorzugt über eine Verstellung des Brühkammerbodens gegenüber der Brühkammerwand, ein Sog entsteht, der über den Umgehungskanal auch auf einen, bevorzugt geräteseitigen, Auslauf jenseits des Auslassventils wirken kann.

Der Hydraulikzylinder kann vorteilhaft so ausgestaltet sein, dass ein hydraulisches Verstellen des Brühkammerbodens gegenüber einer Brühkammerwand ermöglicht wird. Dadurch kann ein hydraulisches Tampern, ein hydraulisches Verkleinern der Brühkammer und gegebenenfalls auch ein hydraulisches Verstellen des Brühkammerbodens bis zu einer Auswerferposition am oberen Rand der Brühkammerwand erreicht werden. Vorteilhaft kann der Hydraulikzylinder als ineinander angeordnete, in Serie geschaltete Kombination von zwei Hydraulikzylindern ausgebildet sein, wobei die zwei Hydraulikzylinder eine teleskopartige Verstellung des Brühkammerbodens ermöglichen.

In einer weiteren, besonders bevorzugten Variante der Brüheinheit kann vorgesehen sein, dass die Antriebsmechanik zur Verstellung der Brühkammer in eine Brühposition eingerichtet ist, wobei die Antriebsmechanik so ausgebildet ist, dass allein über die Antriebsmechanik, insbesondere ohne Verstellung der/des Hydraulikzylinders die Brühkammer, insbesondere die Brühkammerwand, zur dichtenden Anlage an dem Brühkopf bringbar ist. Wie oben bereits ausgeführt, kann bei einer derartigen Ausgestaltung der Antriebsmechanik der, bevorzugt geräteseitige, Antrieb mit verhältnismäßig geringer Leistung ausgestattet werden, da zunächst vollständig kraftlos das Verschließen der Brühkammer durch die Antriebsmechanik bewirkt wird und alle anderen Schritte des Betriebs der Brüheinheit, in der in wesentlichem Umfang Drücke, Gegendrücke und damit auch Kräfte auftreten durch die Ansteuerung und Befüllung/Entleerung des Hydraulikzylinders oder der Hydraulikzylinder aufgefangen oder kompensiert werden.

In einer ersten, besonders vorteilhaften Ausführungsform der Brüheinheit kann vorgesehen sein, dass die Brühkammer, bevorzugt die Brühkammerwand, das Auslassventil, insbesondere aus der Bypassstellung, in eine geschlossene Stellung überführt und den Umgehungskanal schließt, wenn die Antriebsmechanik die Brühkammer in die Brühposition verstellt. Besonders vorteilhaft kann dabei vorgesehen sein, dass die geschlossene Stellung des Auslassventils oder das Überführen des Auslassventils in eine geschlossene Stellung und das Verschließen des Umgehungskanals allein durch die Antriebsmechanik und dementsprechend ohne Beteiligung des Hydraulikzylinders oder der Hydraulikzylinder bewirkt wird. Dies hat den Vorteil, dass ein Verschließen des Auslassventils möglich ist auch ohne dass der Hydraulikzylinder angesteuert oder betätigt werden muss. Dies kann in vorteilhafter Weise den Steuerungs- und/oder Regelungsaufwand verringern. Weiterhin kann dies dann weitgehend kraftlos erfolgen, so dass auch hierfür ein gering dimensionierter, bevorzugt geräteseitiger, Antrieb ausreicht.

In einer weiteren, besonders vorteilhaften Ausgestaltung der Brüheinheit kann vorgesehen sein, dass beim Überführen der Brühkammer in die Brühposition die Brühkammerwand, bevorzugt ein oberer Rand der Brühkammerwand einen unmittelbar mit dem Auslassventils verbundenen Mitnehmer verstellt, der wiederum das Auslassventil gegen einen Rückstellmechanismus, insbesondere aus der Bypassstellung, verstellt, wobei die Verstellung des Auslassventils den Umgehungskanal schließt.

Somit ist eine sehr einfache und direkte mechanische Aktivierung des Auslassventils ermöglicht. Die Kräfte zum Überwinden des Rückstellmechanismus des Auslassventils sind um ein Vielfaches kleiner, als beispielsweise die Kräfte, die in einer vollständig mechanischen Brüheinheit, insbesondere während des Brühprozesses, auftreten. Die Kräfte die vom Rückstellmechanismus bereitgestellt und dementsprechend von der Brühkammer über die Antriebsmechanik überwunden werden müssen, können sich beispielsweise auf die Dichtkräfte beschränken, die notwendig sind, um den Umgehungskanal abzudichten, wenn das Auslassventil verstellt ist. Dementsprechend können als Rückstellmechanismus schwache Federn, beispielsweise Wendelfedern, zum Einsatz kommen. Diese oder der Rückstellmechanismus an sich muss/müssen nur stark genug sein, um das Auslassventil wieder in die Bypassstellung vorzuspannen, wenn die Brühkammer und/oder die Antriebsmechanik die Brühposition verlässt, damit das Auslassventil wieder in die normalerweise-umgehbare Stellung vorgespannt wird. Somit kann in besonders vorteilhafter Weise ein geräteseitiger Antrieb zum Einsatz kommen, der sehr wenig Kraft aufbringen muss oder bereitstellen muss. Denn durch den Hydraulikzylinder, der auf den beweglich in der Brühkammer gelagerten Brühkammerboden wirkt, kann ein Großteil der Kräfte, die während des Brühprozesses auftreten oder notwendig sind, aufgenommen und abgeleitet werden. Somit kann die Antriebsmechanik die Brühkammer kraftlos schließen und dichten und annähernd kraftlos oder mit äußerst geringen Kräften die Schließstellung und die Bypassstellung des Auslassventils anfahren, verlassen und/oder herstellen.

In einer weiteren, ebenfalls besonders wünschenswerten Ausgestaltung der Brüheinheit kann vorgesehen sein, dass in dem ersten Hydraulikzylinder ein zweiter Hydraulikzylinder angeordnet ist, der zusammen mit dem ersten Hydraulikzylinder eine teleskopartige Verstellung des Brühkammerbodens ermöglicht, wobei die Hydraulikzylinder gemeinsam eine Verstellung des Brühkammerbodens bis zum oberen Rand der Brühkammerwand ermöglichen.

Wie vorangehend bereits angedeutet, kann dadurch die Antriebsmechanik mit minimalen Kräften betrieben werden, gleichzeitig jedoch platzsparend, energiesparend und verschleißarm die Verstellung und Kraftbeaufschlagung des Brühkammerbodens erreicht werden, sodass ein hydraulisches Tampern vor dem Brühvorgang ein hydraulisches Erzeugen eines Gegendruckes zum Ausgleich des Innendruckes in der Brühkammer während des Brühvorgangs sowie ein hydraulisches Überführen des Brühkammerbodens in eine Ausstoßposition oder Auswerfposition erreicht werden kann. Dies ermöglicht auch, dass die Antriebsmechanik nur relativ kurze Wege zurücklegen muss. So ist beispielsweise ein linearer Verstellweg der Antriebsmechanik von weniger als 60mm, bevorzugt weniger als 50mm möglich.

Insbesondere in einer Ausführungsform mit einem oder zwei Hydraulikzylinder, die in der Lage sind den Brühkammerboden bis zu einem oberen Rand der Brühkammerwand zu verstellen, ist es als besonders kontraintuitiv und dementsprechend als besonders erfinderisch zu verstehen, wenn die Zwangsbelüftungsposition der Antriebsmechanik/Brühkammer und die Zwangsöffnung des Auslassventils auch als erste Spülposition genutzt werden. Denn dadurch könnte zwar einerseits das Volumen der zu spülenden Brühkammer verringert werden, indem ohne Gegendruck innerhalb der Brühkammer der Brühkammerboden in Richtung des Brühkopfes hydraulisch verstellt wird, diese Einsparung an Spülfluid wäre aber zwangsläufig verbunden mit einer zusätzlichen Füllung oder Befüllung des Hydraulikzylinders oder der Hydraulikzylinder, was Einsparungen von Fluid in Summe entgegenstehen würde, diese aber zumindest deutlich verringern würde. In diesem Zusammenhang ist es ebenfalls eine besondere Leistung der Erfindung, dass erkannt wurde, dass nicht zwangsläufig das Hydraulikfluid des Hydraulikzylinders oder der Hydraulikzylinder als Restwasser oder Abwasser verstanden und behandelt werden muss. Stattdessen kann unter bestimmten Voraussetzungen das Fluid zur Füllung des Hydraulikzylinders oder der Hydraulikzylinder, das sogenannte Hydraulikfluid, wiederverwendet werden, sodass dann eine hydraulische Verstellung des Brühkammerbodens, beispielsweise zur Minimierung des Brühkammervolumens in einem Spülprozess, durchaus Sinn ergeben kann.

Eine weitere, vorteilhafte Ausgestaltung kann vorsehen, dass der Hydraulikzylinder oder die Hydraulikzylinder mit einer Federeinheit oder mit Federeinheiten vorgespannt ist/sind, die einem Ausfahren des Hydraulikzylinders/der Hydraulikzylinder entgegenwirken. Dies kann vorteilhaft dazu führen, dass beim Kraftlosstellen der Hydraulikzylinder, beispielsweise durch Belüftung das in den Hydraulikzylindern befindliche Hydraulikfluid weitestgehend oder vollständig automatisch zurückgefördert wird. Dies kann u.a. einen wesentlichen Beitrag dazu liefern, das Hydraulikfluid wiederzuverwenden.

Ebenfalls kann vorteilhaft vorgesehen sein, dass dem ersten Hydraulikzylinder ein Anschlag zugeordnet ist, der den Hub des ersten Hydraulikzylinders begrenzt und bei weiterem Ansteigen des Innendrucks in den Hydraulikzylinder den zweiten Hydraulikzylinder aktiviert. Damit kann besonders einfach die Aktivierung und/oder die Steuerung von zwei in Serie geschalteten, teleskopartig ineinander verschachtelten Hydraulikzylinder erreicht werden. Denn dann wird der zweite Hydraulikzylinder nur dann aktiviert, wenn der erste Hydraulikzylinder den Anschlag erreicht.

In einer weiteren, besonders wünschenswerten Ausgestaltung der Brüheinheit kann vorgesehen sein, dass der Anschlag so positioniert ist, dass der erste Hydraulikzylinder den Anschlag nicht erreicht, wenn in der Brühkammer zwischen Brühkammerboden und Brühkopf eine Mindestportion eines Getränkesubstratmehls, insbesondere Kaffeebohnenmehl, angeordnet ist oder ein Luftpolster in der Brühkammer eingeschlossen ist, welches ein Volumen einnimmt, das in etwa der Mindestportion eines Getränkesubstratmehls entspricht, sodass ein entsprechender Innendruck in der Brühkammer entsteht, ähnlich wie wenn die besagte Mindestportion in der Brühkammer angeordnet ist. Das Luftpolster und der entsprechende Innendruck in der Brühkammer kann beispielsweise dadurch erzeugt werden, dass ein Auslassventil oder Cremaventil geschlossen oder verschlossen und der Umgehungsanal ebenfalls verschlossen ist und auch am Übergang zwischen Brühkammerwand und Brühkopf sowie zwischen Brühkammerboden und Brühkammerwand entsprechende Dichtungsmittel vorgesehen sind. Bei einem Ausfahren oder Aktivieren des ersten Hydraulikzylinders wird dann die in der Brühkammer eingeschlossene Luft zunächst verdichtet, wobei bei zunehmender Verdichtung ein entsprechender Gegendruck durch das Luftposter generiert wird. Die Vermeidung der Aktivierung des zweiten Hydraulikzylinders durch ein in der Brühkammer eingeschlossenes - gegebenenfalls verdichtetes - Luftpolster kann sinnvoll sein, um z.B. ein Spülprozess durchzuführen, bei dem gleichzeitig auch eine merkliche Menge von Wärmeenergie vom Spülfluid auf die Brühkammer übergeht. In diesem Fall ist es sinnvoll, wenn das Volumen der Brühkammer nicht zu gering ist, was gegeben wäre, wenn der zweite Hydraulikzylinder aktiviert oder ausgefahren ist, da dann nur ein Mindestmaß von Spülfluid in die Brühkammer eingeleitet werden kann und auch nur ein Bruchteil der Brühkammer von dem Fluid benetzt oder kontaktiert wird.

In einer weiteren, vorteilhaften Ausgestaltung der Brüheinheit kann vorgesehen sein, dass der erste Hydraulikzylinder und der zweite Hydraulikzylinder einen, bevorzugt gemeinsamen, Fluideinlass aufweisen, der fluidleitend mit einer Fluidzuleitung der Getränkezubereitungsvorrichtung verbindbar ist, wobei die Hydraulikzylinder mit einem gemeinsamen Gegendruckventil versehen sind, das in fluidleitender Verbindung mit der Brühkammer ausgebildet ist, welches beim Überschreiten eines Grenzdrucks die Zufuhr von Brüh- oder Spülfluid in die Brühkammer freigibt, sodass das Brüh- oder Spülfluid aus dem/den Hydraulikzylinder(n) abfließt und in die Brühkammer einströmt. Durch diese Ausgestaltung wird in vorteilhafter Weise erreicht, dass es innerhalb der Brüheinheit im Wesentlichen nur ein Fluidpfad gibt, der grundsätzlich nur ein Fluid führt und bei dem dementsprechend auch keine Verzweigungen, einschließlich evtl. notwendiger Ventile zur Steuerung der Verzweigung von Fluidpfaden notwendig sind.

Mit anderen Worten ausgedrückt bewirkt dies, dass eine bevorzugt geräteseitige Fördereinrichtung, beispielsweise eine Brühfluidpumpe, Brühfluid zunächst in die Brüheinheit und von dort in die Hydraulikzylinder einleitet. Die Hydraulikzylinder füllen sich mit Brühfluid und vergrößern dabei ihr Volumen, bis entweder ein entsprechender Anschlag erreicht oder ansonsten ein Maximalhub gegeben ist oder bis ein Gegendruckventil am fluidleitenden Übergang zur Brühkammer beim Überschreiten eines vorgegebenen Grenzdrucks innerhalb der Hydraulikzylinder eine fluidleitende Verbindung zwischen dem Hydraulikzylinder und der Brühkammer freigibt. Sofern dann weiter Brühfluid von der Fördereinrichtung bereitgestellt wird, kann Brühfluid von den Hydraulikzylindern in die Brühkammer übertreten und dadurch den Innendruck in der Brühkammer aufbauen, insbesondere, wenn der Umgehungskanal geschlossen ist, zum Beispiel, wenn sich die Brühkammer in der Brühposition befindet. Bevorzugt wird beim Überschreiten eines Innendrucks in der Brühkammer ein Auslassventil, bevorzugt ein sogenanntes Cremaventil, geöffnet. Das vom Brühfluid zum Getränke umgewandelte Fluid kann dann über das Auslassventil und einem nachgelagerten Auslass die Brüheinheit verlassen.

Sobald der Innendruck in der Brühkammer unter den Grenzwert des Auslassventils abfällt, wird dieses wieder verschlossen oder verschließt sich selbsttätig. Durch die Antriebsmechanik und die Brühkammer kann dann jedoch das Auslassventil wieder umgangen werden, wenn zum Beispiel die Antriebsmechanik die Brühkammer erneut in die Schließposition verstellt, in der zwar das eigentliche Auslassventil geschlossen ist/bleibt, aber der Umgehungskanal geöffnet ist. Auch sobald der Innendruck in den Hydraulikzylindern den Grenzdruck des Gegendruckventils unterschreitet, schließt dieses selbsttätig. Dabei wird in besonders vorteilhafter Weise vorgesehen, dass das Gegendruckventil so ausgebildet ist, dass lediglich Fluid von den Hydraulikzylindern in die Brühkammer gelangen kann, jedoch nicht umgekehrt.

In einer weiteren besonders wünschenswerten Ausgestaltung kann vorgesehen sein, dass der Fluideinlass unverzweigt mit der Fluidleitung einer Getränkezubereitungsvorrichtung verbunden ist. Dadurch wird in vorteilhafter Weise ein besonders einfaches und hinsichtlich der Steuerung und Regelung wenig komplexes Fluidsystem geschaffen.

In einer weiteren, besonders wünschenswerten Variante der Brüheinheit kann vorgesehen sein, dass während eines Spülens, insbesondere während eines Zwischenspülens, der Brühkammer in einer ersten Spülposition der Brühkammer der erste und/oder der zweite Hydraulikzylinder befüllt sind und der Brühkammerboden bis auf einen minimalen Abstand, bevorzugt von weniger als 2mm, besonders bevorzugt von weniger als 1mm zum Brühkopf aufweist. Für den Mindestabstand zwischen Brühkopf und Brühkammerboden kann gegebenenfalls ein Abstandshalter vorgesehen sein, der sich vom Brühkammerkopf aus erstreckt, da eine Befüllung der Brühkammer mit Getränkesubstratmehl, keinen oder keinen merklichen Einfluss hat, gleichzeitig jedoch sicherstellt, dass im geschlossenen Zustand der Brühkammer immer ein Mindestabstand zwischen Brühkammerboden und einer Innenoberfläche des Brühkopfes verbleibt. Durch die Einstellung der ersten Spülposition kann in besonders vorteilhafter Weise erreicht werden, dass das Spülvolumen oder das Fluidvolumen zur Durchführung der Spülung oder Zwischenspülung minimiert wird und somit der Fluidverbrauch zur Spülung oder Zwischenspülung minimiert wird.

In einer weiteren, besonders vorteilhaften Alternative der Brüheinheit kann vorgesehen sein, dass die Antriebsmechanik zum Erreichen einer zweiten Spülposition der Brühkammer eingerichtet ist, wobei in der zweiten Spülposition der Umgehungskanal des Auslassventils, insbesondere des Cremaventils, des Brühkopfes geschlossen ist und das Auslassventil erst beim Überschreiten eines Grenzdruckes öffnet, sodass eine Spülung der Brühkammer ermöglicht wird, entgegen einem Innendruck der Brühkammer, bevorzugt einem Innendruck eines Luftpolsters in der Brühkammer. Die zweite Spülposition kann bevorzugt durch die Antriebsmechanik selbst erreicht werden und durch eine spezielle Position der Brühkammer gegenüber der Brühkammer charakterisiert sein, in der zwar die Brühkammer grundsätzlich geschlossen ist und der Brühkopf dichtend an der Brühkammerwand anliegt, gleichzeitig jedoch die Brühkammer der Umgehungskanal das Auslassventil nicht kurzschließt oder umgeht. In dieser Stellung der Antriebsmechanik und der Brühkammer führt eine Druckerhöhung in dem Hydraulikzylinder oder in den Hydraulikzylindern im Wesentlichen zu einer Art "leerem Brühvorgang". Durch ein Luftpolster in der verschlossenen Brühkammer wird mit zunehmendem Druck in den Hydraulikzylindern ein entsprechender Gegendruck in der Brühkammer aufgebaut. Dieser führt dazu, dass der erste Hydraulikzylinder den Anschlag nicht erreicht, vergleichbar zu einem Brühvorgang, in dem im Wesentlichen das Verdichten des Getränkesubstratmehls den Gegendruck oder Innendruck in der Brühkammer erzeugt.

Wie auch bei der Brühposition kann vorgesehen sein, dass die Brühkammer, bevorzugt der obere Rand der Brühkammerwand, das Auslassventil gegen die Vorspannung des Rückstellmechanismus aus der Bypassstellung verstellt und dadurch - bevorzugt mittels entsprechender Dichtmittel - den Umgehungskanal verschließt.

Beim weiteren Erhöhen des Innendrucks in dem Hydraulikzylinder oder in den Hydraulikzylindern wird vorteilhafterweise das Gegendruckventil zwischen Hydraulikzylinder(n) und Brühkammer geöffnet oder freigegeben. In dieser Situation ist der Hydraulikzylinder oder zweite Hydraulikzylinder jedoch nicht aktiviert oder ausgefahren, sodass der Brühkammerboden auf einem Niveau verbleibt, in dem das Brühkammervolumen ähnlich zu dem eines Brühvorgangs mit wenig Getränkesubstratmehl ist. Ein Einströmen von als Spülfluid wirkendem Hydraulikfluid/Brühfluid führt dann dazu, dass die Brühkammer mit einem verhältnismäßig großen Volumen gespült wird. Dies wiederum kann dazu führen, dass einerseits Verunreinigungen, Anhaftungen oder Restpartikel aus der Brühkammer entfernt werden, es kann aufgrund des größeren Volumens von Spülfluid aber auch dazu führen, dass mehr thermische Energie oder Wärme von dem Spülfluid auf die Brühkammer übergeht. Dies bedeutet mit anderen Worten ausgedrückt, dass dadurch neben der Spülung und Reinigung auch eine Aufwärmung oder Vorwärmung der Brühkammer ermöglicht wird. Dementsprechend bietet sich die zweite Spülposition für eine Inbetriebnahme der Brüheinheit und/oder der Getränkezubereitungsvorrichtung an, wohingegen sich die Zwangsbelüftungsposition, insbesondere erste Spülposition, bevorzugt für eine Zwischenspülung zwischen Getränkebezügen oder Brühvorgängen eignet. Bei einer Inbetriebnahme ist es besonders vorteilhaft, wenn vor dem ersten Getränkebezug die Brühkammer vorgewärmt wird, da sonst das erste Getränke eine gewünschte Ausgabetemperatur nicht erreichen kann da zuviel Wärme des Brühfluids von der "kalten" Brühkammer aufgenommen und dem Brühfluid/Getränk entzogen wird.

Im Anschluss an einen Brühvorgang, einen Spülvorgang ausgehend von der ersten Spülposition oder der zweiten Spülposition der Brühkammer kann zudem ein Saugvorgang durchgeführt werden. Dazu wird die Brühkammer vergrößert, zum Beispiel dadurch, dass der Brühkammerboden durch eine Entspannung oder Belüftung des/der Hydraulikzylinder oder eine Richtungsumkehr einer Pumpe. Gleichzeitig oder nachfolgend kann das Auslassventil durch den Rückstellmechanismus in die Bypassstellung vorgespannt werden. Dies kann vorteilhaft dadurch erreicht werden, dass die Brühkammer in die Schließposition oder in die erste Spülposition überführt wird. Dadurch wird das an sich geschlossene Auslassventil über den zugeordneten Umgehungskanal umgehbar und die Volumenarbeit oder Volumenvergrößerung in der noch am Brühkopf abgedichteten Brühkammer erzeugt einen Unterdruck, der sich über den Umgehungskanal auch bis in einen Auslauf der Getränkezubereitungsvorrichtung erstreckt. Dadurch kann Restfluid unterschiedlichsten Ursprungs, bevorzugt Restgetränk, Rest-Spülfluid oder Rest-Reinigungsfluid, aus dem Auslauf über den Umgehungskanal zurück in die Brühkammer gesaugt werden. Von dort aus kann eine Drainage oder ein Ausschleusen zusammen mit Trester erfolgen. Dadurch kann die Getränkequalität verbessert werden, weil im Auslauf keine Restfluide zurückbleiben. Außerdem kann dadurch die Hygiene verbessert werden. Wie mit Bezug zur Getränkezubereitungsvorrichtung noch eingehender Beschrieben kann dadurch auch eine erhöhte Variabilität bezüglich der Konstruktion der Getränkezubereitungsvorrichtung erreicht werden, die unter anderem zu kompakteren Getränkezubereitungsvorrichtungen führen kann.

Die oben genannte Aufgabe wird auch durch eine Getränkezubereitungsvorrichtung, insbesondere einem Kaffee- und/oder Espressovollautomaten, mit einer, insbesondere entnehmbaren, Brüheinheit und einem fest verbauten Antrieb zum Antrieb einer Antriebsmechanik der Brüheinheit, wobei der Antrieb Kopplungsmittel, zum bevorzugt lösbaren Koppeln mit der Brüheinheit umfasst. Erfindungsgemäß ist dabei vorgesehen, dass eine Brüheinheit gemäß einer der vorangehend beschriebenen Ausführungsformen von der Getränkezubereitungsvorrichtung umfasst ist. Der Antrieb kann z.B. als elektromotorischer Antrieb ausgebildet sein. Der Antrieb kann dann mit elektrischer Energie betrieben werden, die auch zum Betrieb eines Heizmittels und/oder eine Mahleinheit bereitgestellt und verwendet wird. Es kann aber auch vorteilhaft vorgesehen sein, dass ein mechanischer, beispielsweise ein händischer oder handbetriebener Antrieb vorgesehen ist.

Um Wiederholungen zu vermeiden, wird zu den Vorteilen, vorteilhaften Wirkungen und Ausführungsformen auf die vorangehende Beschreibung der Brüheinheit Bezug genommen. Besonders hervorhebenswert ist jedoch, dass mit der erfindungsgemäßen Brüheinheit insgesamt eine Getränkezubereitungsvorrichtung ermöglicht wird, die eine sehr sparsame Nutzung von Betriebsmitteln, insbesondere Fluid und/oder elektrischer Energie ermöglicht und zudem verhältnismäßig klein dimensioniert ist.

Gemäß einer vorteilhaften Weiterbildung der Getränkezubereitungsvorrichtung kann vorgesehen sein, dass eine Fluidzuleitung den Fluideinlass der Brüheinheit mit einem Fluidtank, bevorzugt Wassertank, verbindet und keine Abzweigung zur Verbindung des Fluideinlasses der Brühkammer aufweist. Dadurch wird nicht nur ein einfaches Fluidsystem realisiert, sondern auch eine sparsame Fluidverwendung weiter unterstützt. Darüber hinaus kann dadurch eine Getränkezubereitungsvorrichtung bereitgestellt werden, die hinsichtlich der Fluidleitung oder Fluidsteuerung nur ein Mindestmaß an Steuer- und Regelungstechnik benötigt. Es wird insbesondere eine Inline-Fluidführung ohne Totvolume oder Sackloch innerhalb der Brüheinheit ermöglicht.

Weiterhin kann vorgesehen sein, dass eine lösbare Kopplung eine Brühfluidzuleitung der Getränkezubereitungsvorrichtung mit der Brüheinheit verbindet, wobei die Kopplung eine Koppelstelle aufseiten der Brüheinheit und eine Koppelstelle aufseiten der Getränkezubereitungsvorrichtung umfasst, und wobei die Kopplung beweglich gegenüber der Brüheinheit und der Getränkezubereitungsvorrichtung und unbeweglich gegenüber der Brühkammer ausgebildet ist und dadurch zusammen mit der Brühkammer verstellt wird, insbesondere die Koppelstelle der Getränkezubereitungsvorrichtung von der Koppelstelle der Brüheinheit angetrieben wird. Dies ermöglicht, dass die Antriebsmechanik der Brühkammer die Koppelstelle der Getränkezubereitungsvorrichtung steuert und die Koppelstelle der Brüheinheit dementsprechend als Mitnehmer für die Koppelstelle der Getränkezubereitungsvorrichtung dient. Dadurch wird eine passive Führung und Steuerung der Koppelstelle, insbesondere der Koppelstelle aufseiten der Getränkezubereitungsvorrichtung ermöglicht und somit ein separater Antrieb der Koppelstelle insbesondere aufseiten der Getränkezubereitungsvorrichtung überflüssig.

Besonders vorteilhaft kann vorgesehen sein, dass die Kopplungsmittel, insbesondere dies Kopplungsstellen auch zur Verriegelung der Brüheinheit in der Getränkezubereitungsvorrichtung genutzt werden.

In einer weiteren, besonders vorteilhaften Ausgestaltung kann vorgesehen sein, dass die Kopplung ausschließlich zur Entnahme der Brüheinheit aus der Getränkezubereitungsvorrichtung lösbar ist. Dies ermöglicht in besonders vorteilhafter Weise, dass die Anzahl der Löse- und Kopplungsvorgänge der Koppelstellen minimiert wird. Anders als bei anderen Verbindungen zwischen Getränkezubereitungsvorrichtung und deren Brüheinheit wird dann nicht bei jedem Brühvorgang oder Spülvorgang od. dgl. beim Erreichen und Verlassen der jeweiligen Position der Brühkammer eine Kopplung der Brühfluidzuleitung hergestellt und gelöst. Stattdessen ist die Kopplung solange aktiv oder bleibt solange aufrechterhalten, bis die Brüheinheit aus der Getränkezubereitungsvorrichtung entnommen wird. Dadurch wird auf besonders vorteilhafte Weise der Verschleiß der Koppelstellen minimiert, die Langlebigkeit der Koppelstellen verbessert und dadurch eine ungewollte Leckage im Bereich der Koppelstellen langfristig vermieden. Durch die Minimierung an Koppelvorgängen wird zudem eine mögliche Quelle von Kontaminationen des Fluids/Brühfluids weitestgehend eliminiert. Denn bei voneinander getrennten Koppelstellen besteht viel stärker die Möglichkeit oder Gefahr, dass Verschmutzungen, Keime oder Pilze sich an, in oder auf den Koppelstellen ablagern und somit mit dem geförderten Fluid in Kontakt kommen.

In einer weiteren vorteilhaften Ausgestaltung kann vorgesehen sein, dass die Getränkezubereitungsvorrichtung einen geräteseitigen Auslauf aufweist der mit einem Auslauf der Brüheinheit fluidleitend verbunden ist, wobei ein Endabschnitt des Auslaufs der zur Abgabe eines Getränks dient auf einer Höhe angeordnet ist, die, besonders bei eingesetzter Brüheinheit, oberhalb des Auslaufs der Brühkammer angeordnet ist.

Normalerweise wird ein geräteseitiger Auslauf vorgesehen, der unterhalb des Auslaufs der Brüheinheit angeordnet ist, damit Fluid möglichst vollständig unter Schwerkrafteinwirkung zum Endabschnitt des Auslaufs der Getränkezubereitungsvorrichtung fließen. Wie oben bereits ausgeführt, ermöglicht das normalerweise umgehbare Auslassventil mitsamt dem dazugehörigen Umgehungskanal, dass eine Saugfunktion ermöglicht oder ein Saugvorgang durchgeführt wird. Damit kann sichergestellt werden, dass Fluid nicht im Auslauf der Getränkezubereitungsvorrichtung verbleibt, selbst, wenn dieser oberhalb der Auslaufs der Brüheinheit angeordnet ist, da der Saugvorgang dieses sicher zurück in die Brühkammer überführt. Daraus resultiert aber auch, dass die Brüheinheit sehr tief in der Getränkezubereitungsvorrichtung angeordnet werden kann und gleichzeitig unterschiedliche große, insbesondre auch sehr hohe, Getränkegefäße, wie beispielsweise Lattemacchiato-Gläser, unter dem Endabschnitt Platz finden können. Damit kann eine geringe Gesamtbauhöhe der Getränkezubereitungsvorrichtung erreicht werden, ohne dass eine Beschränkung hinsichtlich der Getränke oder Getränkegefäße damit einhergeht.

Besonders bevorzugt kann der Endabschnitt des Auslaufs der Getränkezubereitungsvorrichtung höhenverstellbar ausgebildet sein, wobei zumindest auch Höhen einstellbar sind, bei denen der Endabschnitt oberhalb des Auslaufs der Brüheinheit angeordnet ist.

Die oben genannte Aufgabe wird auch durch ein Verfahren zum Betrieb einer Brüheinheit für eine Getränkezubereitungsvorrichtung, insbesondere einen Kaffee- und/oder Espressovollautomaten, gelöst, bei dem mit einer Antriebsmechanik eine Brühkammer zwischen mehreren Positionen verschwenkt und/oder linear verfahren wird, wobei die Brühkammer einen verschiebbar gegenüber einer Brühkammerwand gelagerten Brühkammerboden aufweist, der während einer Getränkeherstellung in eine Tamperposition und zum Abschluss der Getränkeherstellung in eine Ausstoßposition verstellt wird, wobei ein, insbesondere erster, Hydraulikzylinder vorgesehen ist, der den Brühkammerboden vor und/oder während der Getränkeherstellung in Richtung eines die Brühkammer verschließenden Brühkopfes kraftbeaufschlagt, wobei die Antriebsmechanik zur Erreichung einer Brühposition und/oder Spülposition die Brühkammerwand zur dichtenden Anlage am Brühkopf bringt.

Erfindungsgemäß ist vorgesehen, dass einem Auslassventil, bevorzugt einem Cremaventil, ein Umgehungskanal zugeordnet ist, durch den Fluid das Auslassventil umgeht, insbesondere ohne, dass das Auslassventil in eine Öffnungsstellung überführt wird, wobei dass das Auslassventil in eine Bypassstellung vorgespannt wird, in der der Umgehungskanal geöffnet ist und Fluid das Auslassventil umgeht.

Bezüglich der Vorteile und vorteilhaften Wirkungen wird - auch zur Vermeidung von Wiederholungen - auf die vorangehende Beschreibung der Getränkezubereitungsvorrichtung und der Brüheinheit verwiesen. Besonders erwähnenswert ist, dass die Schließposition der Brühkammer nur durch die Antriebsmechanik und unabhängig von sonstigen Zuständen der Brühkammer oder Brüheinheit erreicht oder eingestellt/angefahren werden kann. Dies wird u.a. besonders vorteilhaft dadurch erreicht, dass der wenigstens eine Hydraulikzylinder zusätzlich und unabhängig von der restlichen Brühkammer aktiviert und dadurch der Brühkammerboden verstellt und kraftbeaufschlagt werden kann, sodass die Brühkammer selbst, im Zusammenspiel mit der Antriebsmechanik, unabhängiger bewegt, angesteuert und verfahren werden kann, sodass dann insbesondere leidglich über die Brühkammer und die Antriebsmechanik, besonders bevorzugt ausschließlich über die Position der Brühkammer in der Brüheinheit, erreicht werden kann, dass das Auslassventil, insbesondere Cremaventil, des Brühkopfes umgangen wird.

In einer ersten vorteilhaften Ausgestaltung des Verfahrens kann vorgesehen sein, dass in einem Zwischenspülverfahren, bevorzugt zwischen einzelnen Getränkeherstellungen, die Antriebsmechanik die Brühkammer in die Schließsposition, bevorzugt eine erste Spülposition, verstellt, wobei in der Schließposition, bevorzugt der ersten Spülposition, die Brühkammerwand dichtend an dem Brühkopf anliegt und das Auslassventil, insbesondere ein Cremaventil, des Brühkopfes über den Umgehungskanal umgangen wird, sodass eine Spülung der Brühkammer ermöglicht wird, ohne dass ein Innendruck in der Brühkammer aufgebaut wird.

Weiterhin kann vorteilhaft vorgesehen sein, dass Fluid aus dem Hydraulikzylinder ausschließlich in eine Fluidzuleitung der Getränkezubereitungsvorrichtung abgelassen werden kann, wozu ein Fluideinlass der Brüheinheit unverzweigt mit einer Fluidzuleitung der Getränkezubereitungsvorrichtung verbunden ist. Dadurch kann besonders vorteilhaft eine sparsame Fluidnutzung erreicht werden.

Eine weitere vorteilhafte Ausgestaltung des Verfahrens kann vorsehen, dass in dem ersten Hydraulikzylinder ein zweiter Hydraulikzylinder angeordnet ist, wobei der zweite Hydraulikzylinder zusammen mit dem ersten Hydraulikzylinder teleskopartig verstellt wird und eine Verstellung des Brühkammerbodens bewirkt, sodass die Hydraulikzylinder gemeinsam den Brühkammerboden bis zu einem oberen Rand der Brühkammerwand in eine Ausstoßposition verstellen. Bezüglich der Vorteile wird auf die entsprechende Ausführung der Brüheinheit verwiesen.

Weiterhin kann das Verfahren besonders vorteilhaft vorsehen, dass mittels der Antriebsmechanik die Brühkammer in eine Brühposition verstellt wird, insbesondere bevor der Brühkammerboden in die Tamperposition verstellt wird, wobei die Antriebsmechanik allein, insbesondere ohne eine Verstellung der/des Hydraulikzylinder(s), die Brühkammer, insbesondere die Brühkammerwand, den Umgehungskanal schließt und das Auslassventil erst beim Überschreiten eines Grenzdrucks im Inneren der Brühkammer öffnet. Bevorzugt wird dazu das Ventil aus der Bypassstellung gegen die Vorspannung eines Rückstellmechanismus verstellt. Besonders vorteilhaft kann dabei vorgesehen sein, dass die Brühkammer und/oder die Brühkammerwand bis an einen mechanischen Anschlag verstellt wird. Der Anschlag kann vorteilhaft durch eine Maximalauslenkung des Rückstellmechanismus vorgegeben sein. Der Anschlag wird vorteilhaft kraftlos oder mit minimalem Kraftaufwand, beispielsweise zur Herstellung eines Dichtzustandes zur Abdichtung des Umgehungskanals und zur Überwindung der Rückstellkräfte des Rückstellmechanismus, erreicht. Letztgenannte Kräfte können aber, wir oben bereits beschrieben sehr gering ausfallen.

Wie oben bereits erwähnt, ist es eine besondere Leistung der vorliegenden Erfindung, dass die Brühkammer weitestgehend unabhängig von dem/den Hydraulikzylinder(n) in unterschiedliche Positionen mittels der Antriebsmechanik verstellt werden kann, um unterschiedliche Funktionen oder Verfahren/Prozesse optimal zu unterstützen. Insbesondere dient die Brühkammer auch zu Steuerung des Umgehungskanals und damit zur Steuerung des normalerweise umgehbaren Auslassventils.

Dies ermöglicht auch, dass eine Antriebsmechanik realisiert wird, die verhältnismäßig wenig Kräfte aufnehmen oder ableiten muss. Dadurch kann aufseiten der Getränkezubereitungsvorrichtung ein verhältnismäßig schwacher oder kleindimensionierter Antrieb zum Einsatz kommen. Auch die Antriebsmechanik selber kann entsprechend "schlank" realisiert werden, weil wenig Kräfte aufgenommen und abgeleitet werden müssen.

In einer weiteren, vorteilhaften Ausgestaltung des Verfahrens kann vorgesehen sein, dass der zweite Hydraulikzylinder aktiviert wird, wenn der erste Hydraulikzylinder einen zugeordneten Anschlag erreicht, der den Hub des ersten Hydraulikzylinders begrenzt und der Innendruck in den Hydraulikzylindern weiter ansteigt. Auch zu dieser Ausführungsform wird auf die entsprechenden Ausführungen der Brüheinheit weiter oben verwiesen.

Weiterhin ist es besonders vorteilhaft möglich eine Variante des Verfahrens vorzusehen, bei dem in einem Aufheizspülverfahren, bevorzugt nach einem Einschalten oder einer Inbetriebnahme der Getränkezubereitungsvorrichtung, die Antriebsmechanik die Brühkammer in eine zweite Spülposition verstellt, wobei in der zweiten Spülposition der Umgehungskanal geschlossen ist und das Auslassventil, insbesondere das Cremaventil, des Brühkopfes erst beim Überschreiten eines Grenzdrucks innerhalb der Brühkammer öffnet, sodass eine Spülung der Brühkammer gegen einen Innendruck der Brühkammer durchgeführt wird.

Auch hier kann besonders vorteilhaft lediglich die Antriebsmechanik in ihrer direkten Auswirkung auf die Position der Brühkammer allein und unabhängig vom Hydraulikzylinder oder den Hydraulikzylindern genutzt werden, um die zweite Spülposition anzufahren oder einzustellen. In der zweiten Spülposition der Brühkammer kann dann, ähnlich einem "leeren Brühvorgang" ein verhältnismäßig großes Spülvolumen der Brühkammer dadurch erreicht oder erhalten werden, dass zunächst ein Luftkissen innerhalb der Brühkammer verdichtet wird. Je nach Ausgestaltung des oder der Hydraulikzylinder kann insbesondere bei der Realisierung von zwei teleskopartig ineinander geschachtelten Hydraulikzylinder vorgesehen sein, dass beim entsprechenden Luftkissen innerhalb der Brühkammer der Anschlag des ersten Hydraulikzylinders nicht erreicht, der zweite Hydraulikzylinder dementsprechend nicht aktiviert oder verstellt wird und dementsprechend das Hydraulikfluid in den Hydraulikzylinder den Innendruck in den Hydraulikzylindern weiter aufbaut, bis das Gegendruckventil am Übergang zur Brühkammer öffnet. Das Spülfluid kann dann solange in der verhältnismäßig großen - großvolumigen - Brühkammer auf die Oberflächen der Brühkammer einwirken, bis das Auslassventil, bevorzugt ebenfalls als Gegendruckventil ausgestaltet, bei geschlossenem Umgehungskanal öffnet und das Spülfluid abfließt.

Die vorliegende Erfindung wird nachfolgend anhand von rein schematischen, beispielhaften Ausformen darstellenden Zeichnungen beschrieben werden. Darin zeigen:
- Fig. 1:: eine Schnittdarstellung durch eine erfindungsgemäße Brüheinheit in einer Mahlposition;
- Fig. 2:: einen Schnitt durch eine erfindungsgemäße Brüheinheit in einer Verschlussposition;
- Fig. 3:: eine schematische Schnittdarstellung durch eine erfindungsgemäße Brüheinheit in einer Brühposition;
- Fig. 4:: eine schematische Schnittdarstellung durch eine erfindungsgemäße Brüheinheit in einer Auswurfposition;
- Fig. 5:: eine schematische Schnittdarstellung durch eine erfindungsgemäße Brüheinheit in einer ersten Spülposition;
- Fig. 6:: eine schematische Schnittdarstellung durch eine erfindungsgemäße Brüheinheit in einer zweiten Spülposition;
- Fig. 7:: eine schematische Perspektivdarstellung einer Brüheinheit in einer Getränkezubereitungsvorrichtung;
- Fig. 8:: eine schematische Schnittdarstellung im Bereich einer Kopplung von Brüheinheit und Getränkezubereitungsvorrichtung;
- Fig. 9:: eine vergrößerte Darstellung einer Schnittdarstellung der Brüheinheit im Bereich des Brühkopfes;
- Fig. 10:: ein vergrößerter Ausschnitt einer Schnittdarstellung durch eine Brüheinheit in einer Schließposition der Brühkammer.

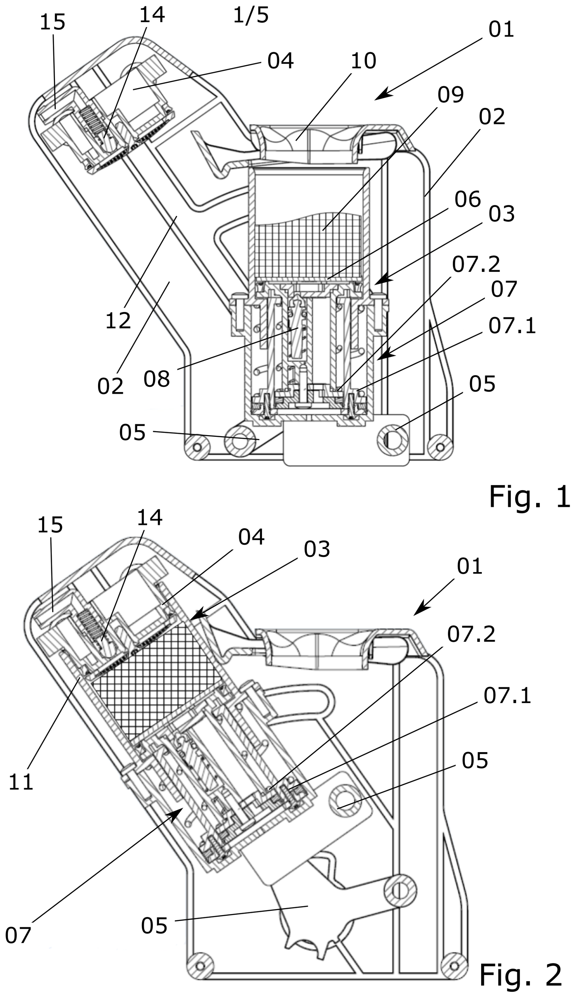

Die Fig. 1 zeigt eine erfindungsgemäße Brüheinheit 01, die ein Gehäuse 02, eine Brühkammer 03, einen Brühkopf 04 sowie eine Antriebsmechanik 05aufweist, wobei letztere dazu eingerichtet ist die Brühkammer 03 zu verschwenken und/oder linear zu verfahren.

Die Brühkammer 03, insbesondere ein Brühkammerboden 06 steht in direkter mechanischer Wirkverbindung mit einem Hydraulikzylinder 07. Der Hydraulikzylinder 07 ist auf einer Eingangsseite mit einem Brühfluidzufluss fluidleitend verbunden, der nicht im Detail dargestellt ist. Auf einer Ausgangsseite weist der Hydraulikzylinder 07 ein Gegendruckventil 08 auf, dass ermöglicht, dass Hydraulikfluid, welches bevorzugt auch als Brühfluid fungiert und in einem unverzweigten Fluidpfad die Brüheinheit 01 durchströmt, aus dem Hydraulikzylinder 07 abfließt und in die Brühkammer 03 strömt. Der Innendruck im Hydraulikzylinder 07, bei dem ein Durchfluss von Hydraulikfluid/Brühfluid in die Brühkammer 03 freigegeben wird, wird somit über die Eigenschaften des Gegendruckventils 08 bestimmt. Über die unmittelbare Einwirkung auf den Brühkammerboden 06 wird damit über das Gegendruckventil 08 auch ein Vorverdichten des Getränkesubstratmehls 09, beispielsweise Kaffeebohnenmehl, definiert. Auch der Druck auf die Brühkammer 03 während des Brühens wird über das Gegendruckventil 08 mitgesteuert, weil nur während des geöffneten Gegendruckventils 08 Brühfluid in die Brühkammer 03 strömen kann. In der Fig. 1 bereits angedeutet ist, dass es sich bei dem Hydraulikzylinder 07 in der Tat um einen ersten Hydraulikzylinder 07.1 und einen zweiten Hydraulikzylinder 07.2 handelt, wobei der zweite Hydraulikzylinder 07.2 so in Serie zum und/oder in dem ersten Hydraulikzylinder 07.1 angeordnet ist dass die Hydraulikzylinder 07.1, 07.2 zusammen eine teleskopartige Verstellung des Brühkammerboden 06 ermöglicht, wobei die Hydraulikzylinder 07.1, 07.2 gemeinsam eine Verstellung des Brühkammerbodens 06 bis zu einem oberen Rand der Brühkammerwand 11 ermöglichen. Die Verstellung oder Aktivierung der Hydraulikzylinder 07.1, 07. 2 wird im Zusammenhang mit den Fig. 2 bis 6 noch näher erläutert werden.

In der Darstellung der Fig. 1 befindet sich die Brüheinheit 01 in einer Mahlposition. Das Gehäuse 02 weist eine Befüllöffnung 10 auf, über die, beispielsweise schwerkraftbedingt, Getränkesubstratmehl 02 von einer Mahleinheit - in der Figur 1 nicht dargestellt - in die Brüheinheit 01 eingefüllt werden kann. In der Brühposition der Fig. 1 kann der Hydraulikzylinder entleert sein. Es kann aber auch vorgesehen sein, dass der Hydraulikzylinder 07 zu Beginn des Mahl- oder Befüllvorgangs mit einer Restmenge von Hydraulikfluid gefüllt ist und abhängig von dem herzustellenden Getränk und der dementsprechenden Ansteuerung der geräteseiteigen, nicht dargestellten Mahleinheit eventuell die Restmenge abgelassen oder verdängt wird, zum Beispiel, wenn eine besonders große Menge Getränkesubstratmehl eingefüllt werden soll. Dadurch kann bei moderaten Portionen von Getränkesubstratmehl der anschließende Brühvorgang schneller durchgeführt werden, weil weniger zusätzliches Fluid in den Hydraulikzylinder eingefüllt werden muss, beispielsweise um die Brühposition zu erreichen.

In der Fig. 2 ist die erfindungsgemäße Brüheinheit in einer Verschlussposition dargestellt. Es ist erkennbar, dass der Hydraulikzylinder 07, weder der erste Hydraulikzylinder 07.1 noch der zweite Hydraulikzylinder 07.2 gefüllt ist. Die Brühkammer 03, insbesondere die Brühkammerwand 11 liegt dichtend an dem Brühkopf 04 an und verschließt damit die Brühkammer 03. In besonders vorteilhafter Weise kann das Verschließen der Brühkammer - der Übergang von der Darstellung der Fig. 1 zur Darstellung der Fig. 2 - kraftlos erfolgen. Dies bedeutet, dass keine mechanischen Rückstellkräfte, Federkräfte oder dergleichen überwunden werden müssen, um den Zustand der Fig. 2 zu erreichen.

Besonders vorteilhaft kann vorgesehen sein, dass ein Verfahrweg zum linearen Verfahren der Brühkammer 03, beispielsweise entlang der in der Fig. 1 dargestellten Führung 12 weniger als 60mm, bevorzugt weniger als 50 mm, beträgt. Durch einen kurzen Verfahrweg kann sichergestellt werden, dass die oben genannten maximalen Abmessungen und das maximale Volumen eingehalten werden und dass das Erreichen der unterschiedlichen Positionen der Brüheinheit innerhalb kurzer Zeitintervalle ermöglicht wird. Besonders vorteilhaft lässt sich ein geringer Verfahrweg von weniger als Z cm mit einem Hydraulikzylinder 07 kombinieren. In der Fig. 2 ist erkennbar, dass die Antriebsmechanik 05 der Brüheinheit 01 so ausgebildet ist, dass die Brühkammer 03 in die dargestellte Verschlussposition überführt werden kann. Einzig und allein dadurch, dass die Antriebsmechanik betätigt oder verstellt wird und insbesondere ohne dass der Hydraulikzylinder betätigt, befüllt oder verstellt wird.

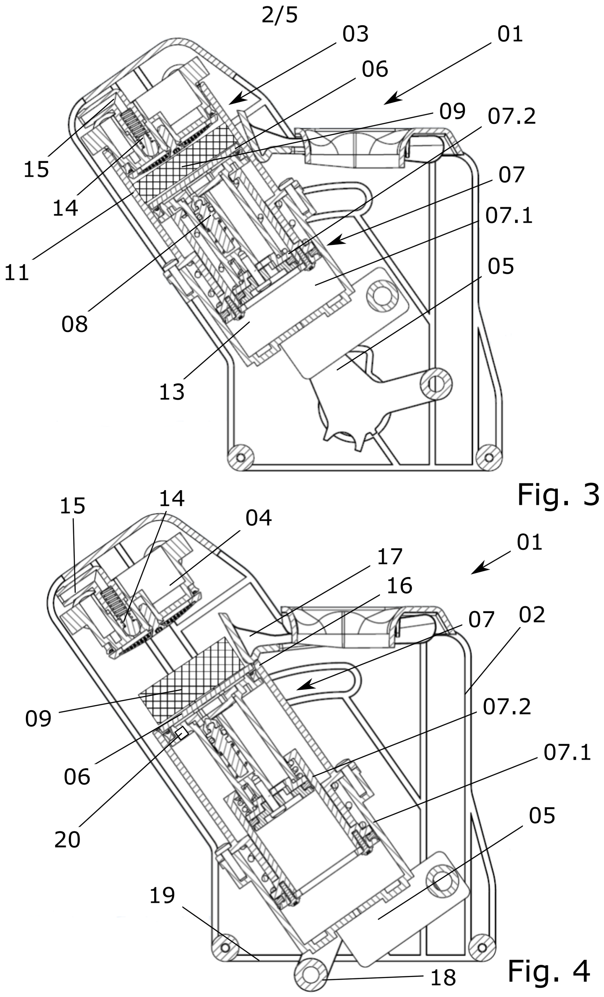

In der Verschlussposition der Brühkammer in der Fig. 2 kann vorgesehen sein, dass das Auslassventil 14 in einer geschlossenen, umgehbaren Stellung und/oder Schaltzustand befindlich ist, wobei die Umgehung über einen nicht im Detail dargestellten Umgehungskanal des Auslassventils 14 erreicht wird. Dies ermöglicht vorteilhaft, dass während des nachfolgdenden Tamperns/Verdichten des Getränkesubstratmehls 09 - siehe Zustand, wie in der Fig. 3 dargestellt - kein Gegendruck in der Brühkammer 03 aufgebaut wird und im Getränkesubstrat 09 eingeschlossene Luft einfach durch den Umgehungskanal und den Auslauf 15 entweichen kann. Das Auslassventil 14 an sich, welches als Gegendruckventil ausgebildet ist kann dabei verschlossen bleiben.

Alternativ ist es auch möglich, dass sich die Brühkammer in der Darstellung der Fig. 2 bereits in einer Brühposition befindet. In dieser ist der Umgehungskanal geschlossen und das Auslassventil 14 bleibt so lange geschlossen, bis es auf Grund eines Überdrucks in der Brühkammer 14 selbsttätig öffnet.

In der Fig. 3 ist die Brüheinheit 01 in einer Brühposition dargestellt. Es ist erkennbar, dass im Hydraulikzylinder 07, der bevorzugt und platzsparend ein unteres Ende der Brühkammer 03 ausbilden kann, in einem unteren Bereich 13 ein Hydraulikfluid, bevorzugt ein Brühfluid mit gleichzeitiger Funktionalität als Hydraulikfluid eingefüllt ist. Dadurch wird der erste Hydraulikzylinder 07.1 verstellt und der Brühkammerboden angehoben. Der zweite Hydraulikzylinder 07. 2 bleibt unverstellt und unbefüllt, da dieser einen kleineren Durchmesser aufweist und daher erst verstellt wird, wenn der erste Hydraulikzylinder 07.1 eine Maximalverstellung erreicht hat und der Innendruck in den Hydraulikzylindern 07.1, 07.2 weiter steigt.

Dementsprechend ist in der Fig. 3 der Brühkammermoden 06 innerhalb der Brühkammer 03, insbesondere gegenüber der Brühkammerwand 11 gegenüber der Situation oder Position der Fig. 2 verstellt worden. Dies führt dazu, dass das Getränkesubstratmehl 09 innerhalb der Brühkammer 03 zwischen Brühkopf 04 und Brühkammerboden 06 komprimiert oder getampert wird. Die mechanische Antriebsvorrichtung kann in einen überstreckten oder ansonsten gesicherten Zustand befindlich sein, um sicherzustellen, dass die Antriebsmechanik 05 und/oder der geräteseitige Antrieb zur Erreichung der Brühposition kraftlos und/oder energielos geschaltet werden kann/können und gleichzeitig die Antriebsmechanik 05 als Wiederlager für die Kräfte des Hydraulikzylinders 07 fungieren kann.

Bevorzugt kann in der Brühposition der Brühkammer 03 das Auslassventil 14 aus einer Bypassstellung verstellt worden sein und dadurch der Umgehungskanal geschlossen sein. Dann ist das Auslassventil 14 nur noch durch einen Überdruck oder Innendruck im Inneren der Brühkammer 03 zu öffnen. Dies erlaubt eine Herstellung eines Getränks mit leichtem Schaum, der sogenannten Cream.

Sobald der Innendruck im Hydraulikzylinder 07, insbesondere im unteren Bereich 13 ein Grenzdruck überschreitet, öffnet das Gegendruckventil 08 und das Hydraulikfluid oder Brühfluid kann in die Brühkammer 03 einströmen, beispielsweise durch einen Brühkammerboden 06 mit einer Lochung oder Perforierung. Daraufhin steigt der Innendruck innerhalb der Brühkammer 03 an, bis ein Auslassventil 14, das mitunter auch als Cremaventil bezeichnet wird, geöffnet wird. Das Auslassventil 14 kann ebenfalls als Gegendruckventil ausgebildet sein und selbstständig oder selbsttätig öffnen, wenn innerhalb der Brühkammer 03 ein ausreichender Druck vorherrscht oder aufgebaut ist. Über den an das Auslassventil 14 anschließenden Auslauf 15 kann ein innerhalb der Brühkammer 03 erzeugtes Getränk ausgegeben werden. Zum Druckaufbau im Hydraulikzylinder 07 und/oder der Brühkammer kann eine nicht dargestellt, geräteseitige Pumpe dienen, die Fluid, im Fall eines Brühvorgangs bevorzugt heißes Wasser, in und durch die Komponenten der Brüheinheit 01 pumpt.

In der Fig. 4 ist eine Auswurfposition der Brüheinheit 01 dargestellt. Es ist erkennbar, dass die Antriebsmechanik 05 gegenüber der Position der Fig. 3 und 4 linear zurück oder vom Brühkopf 04 weg bewegt wurde. Ein Verschwenken zurück in die Mahlposition der Fig. 1 hat noch nicht stattgefunden. Stattdessen ist eine zusätzliche Betätigung oder Verstellung des Hydraulikzylinders 07 erfolgt und dargestellt. In der Ausführungsform der Fig. 4 ist der zweite Hydraulikzylinder 07.2 teleskopartig zusammen mit dem ersten Hydraulikzylinder 07.1 verstellt und mit Hydraulikfluid gefüllt.

Der zweite Einzelzylinder 07.2 umfasst einen geringeren Durchmesser oder Querschnitt als der erste Einzelzylinder 07.1. Weiterhin kann der erste Einzelzylinder 07.1 ein Anschlag aufweisen, der den Hub des ersten Einzelzylinders 07.1 begrenzt. Da die Brühkammer 03 geöffnet ist, entwickelt sich kein Gegendruck zum Innendruck der Hydraulikzylinder 07.1, 07.2. Beim Einfüllen von Hydraulikfluid in den ersten Hydraulikzylinder 07. 1 fährt dieser bei, ausreichendem Volumen, bis an einen nicht dargestellten Anschlag. Weiter einströmendes Fluid führt dazu, dass der zweite Hydraulikzylinder 07.2 verstellt und gefüllt wird. In der Darstellung der Fig. 4 ist erkennbar, dass über ein Füllen oder Betätigen der beiden Einzelzylinder 07.1, 07.2 der Brühkammerboden 06 so höhenverstellbar gegenüber der Brühkammer 03 oder der Brühkammerwand 11 ist, so dass der Brühkammerboden 06 bis an einen oberen Rand 16 der Brühkammerwand 11 verstellt werden kann. Dies ermöglicht dann, dass ein Auswerfer 17, der bevorzugt als Abstreifer ausgebildet sein kann, zum Abschluss eines Getränkebezugs oder Brühvorgangs den ausgelaugten Trester oder das verbleibende Getränkesubstratmehl 09 auswerfen kann. Die Position des Brühkammerbodens 06 kann mittels eines Magneten 20 in Verbindung mit einem geräteseiteigen - nicht dargestellten - Reed-Sensor erfasst werden.

Die Möglichkeit eines hydraulischen Auswurfs des Getränkesubstratmehls 09 nach dem Brühvorgang ermöglicht weiterhin in vorteilhafterweise eine sehr kompakte Ausgestaltung der Brüheinheit 01. In der Fig. 4 ist nochmals erkennbar, dass der Hydraulikzylinder 07 das untere Ende der Brühkammer 03 ausbildet. Besonders vorteilhaft ist, dass keine zusätzlichen Bauteile, wie beispielsweise ein Stößel, zum Verstellen des Brühkammerbodens 06 bodenseitig über den Hydraulikzylinder 07 hervorragt oder übersteht. Dies bedeutet auch, dass der Bauraum, der zum Einbau der Brüheinheit 07 vorgesehen werden muss ausschließlich oder zumindest ganz wesentlich durch das Gehäuse 02 der Brüheinheit definiert wird und kein zusätzlicher Bauraum vorgesehen werden muss, für Bauteile, die zu gewissen Zeitpunkten des Brühvorgangs wesentlich aus der Brüheinheit 01 oder aus dem Gehäuse 02 der Brüheinheit 01 hervorstehen oder überstehen.

Eine geringfügige Ausnahme bildet ein Hebel 18 der Antriebsmechanik 05, der in der Auswurfposition der Fig. 4 geringfügig über ein Bodenteil 19 des Gehäuses 02 der Brüheinheit 01 übersteht. So kann im Bereich des Bodenteils 19 eine nicht im Detail dargestellte Öffnung oder Ausnehmung im Gehäuse 02 realisiert sein. Abgesehen von einem zeitweisen Hervorstehen oder Überstehen des Hebels 18 kann die Brüheinheit 01 jedoch so realisiert sein, dass keine Bauteile oder Komponenten über die einhüllende Kontur des Gehäuses 02 überstehen oder hervorragen.

Beim Übergang zwischen der Darstellung der Fig. 3 zu der Fig. 4 kann zudem vorgesehen sein, dass noch in einer Position der Brühkammer 03, in der diese dichtend an dem Brühkopf 04 anliegt eine Entspannung des Hydraulikzylinders 07 stattfindet, während das Auslassventil 14 bereits wieder in die Bypassstellung vorgespannt ist und dadurch der Umgehungskanal geöffnet ist, selbst wenn das Auslassventil 14 selbst verschlossen bleibt. Durch das Entspannen des Hydraulikzylinders 07 vergrößert sich das Volumen der Brühkammer 03 und es entsteht ein Unterdruck oder Sog, der über den Umgehungskanal vorbei am Auslassventil auf den Auslauf 15 wirkt. Damit kann zum Beispiel Restgetränk im Auslauf 15 in die Brühkammer 03 zurück gesogen werden und anschließend mit dem Getränkesubtratmehl 09 oder Trester entsorgt werden.

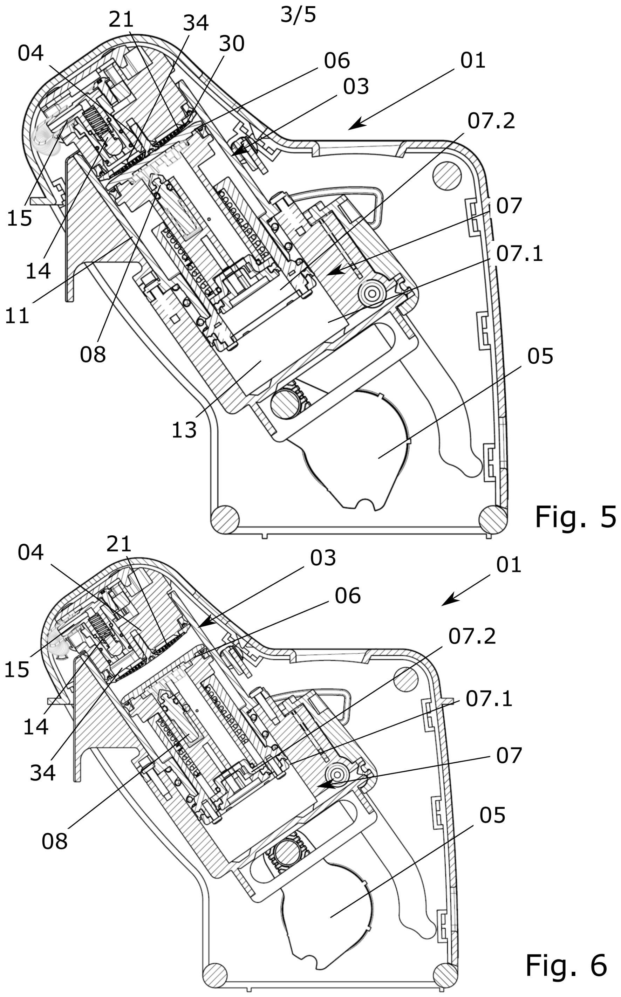

In der Fig. 5 ist eine erste Spülposition der Brüheinheit und/oder der Brühkammer dargestellt. Über die Antriebsmechanik 05 wird die ersten Spülposition der Brühkammer 03 erreicht. In der ersten Spülposition der Fig. 5 ist das Auslassventil 14, insbesondere ein Cremaventil, des Brühkopfes 04, bevorzugt durch die Position der Brühkammer 03 selbst geschlossen und über den nicht dargestellten Umgehungskanal umgehbar, sodass eine Spülung der Brühkammer 03 ermöglicht wird, ohne dass ein Innendruck in der Brühkammer 03 aufgebaut wird. Dabei wird beim Einströmen von Hydraulikfluid in die Hydraulikzylinder 07.1, 07.2 eine Verstellung beider Hydraulikzylinder bewirkt, weil, ähnlich wie in der Situation der Fig. 4, durch das geöffnete Auslassventil 14 und in Ermanglung von Wiederstand durch Getränkesubstratmehl 09 kein Gegendruck auf die Hydraulikzylinder wirkt. Der Brühkammerboden 06 wird fast bis an eine Innenoberfläche 21 des Brühkopfes 04 verstellt, bis er an einer Anschlagsfläche 30 zur Anlage kommt. Dann öffnet abermals beim Überschreiten des Grenzdrucks des Überdrückventils 08 die Fluidverbindung zwischen Hydraulikzylinder 07 und Brühkammer 03 und die Spülung kann mit minimalem Volumen durchgeführt werden.

In der Fig. 6 ist eine zweite Spülposition der Brüheinheit und/oder der Brühkammer dargestellt. Die Position der Brühkammer 03 und der Antriebsmechanik 05 entspricht im Wesentlichen der Brühposition der Fig. 3. Der Hauptunterschied besteht darin, dass kein Getränkesubstratmehl 09 in der Brühkammer 03 eingefüllt ist. Es kommt beim Pumpen von Hydraulikfluid oder Brühfluid in die Brüheinheit 01 dazu, dass sich bei der anfänglichen Verstellung des ersten Hydraulikzylinders 07.1 in der verschlossenen Brühkammer 03 bei geschlossenem Umgehungskanal 34 ein verdichtetes Luftkissen ausbildet/ansammelt, was ähnlich wirkt, wie Getränkesubstratmehl. Dadurch wird sichergestellt, dass der zweite Hydraulikzylinder 07.2 nicht aktiviert wird und das Gegendruckventil 08 bereits öffnet, wenn zwischen Brühkopf 04, insbesondere Innenoberfläche 21 und Brühkammerboden 06 noch ein merklicher Abstand besteht und dadurch auch ein größeres Brühkammervolumen mit mehr Spülfluid gespült wird. Dadurch kann besser oder effektiver Wärme an die Brühkammer abgegeben werden, weshalb sich die zweite Spülposition besonders für eine Initialspülung beim Einschalten der Getränkezubereitungsvorrichtung eignet, um die Brühkammer 03 vorzuwärmen und anschließend ein Getränk mit ausreichend hoher Temperatur erzeugen zu können.

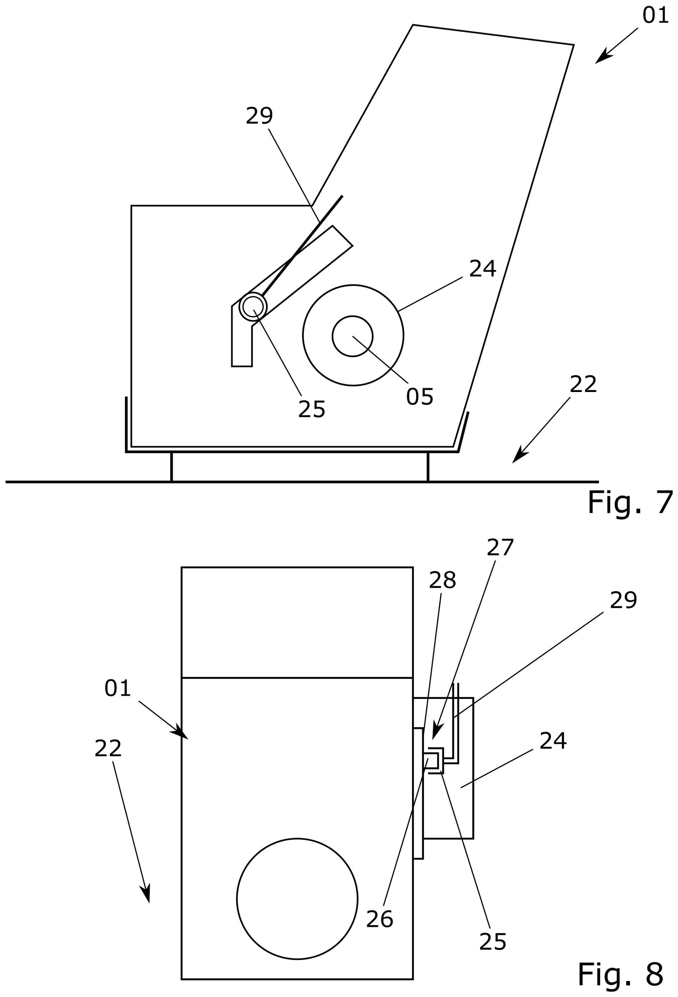

Fig. 7 zeigt eine Seitenansicht einer Brüheinheit 01, die in eine Getränkezubereitungsvorrichtung 22 eingesetzt ist. Bei dem Beispiel der Fig. 7 handelt es sich um eine Ausführungsform mit einem elektrischen Antrieb. Es kann alternativ jedoch auch vorgesehen sein, dass der Antrieb manuell und/oder handbetrieben ausgeführt ist. Es sind nur ein gewisser Teile der Getränkezubereitungsvorrichtung 22 gezeigt, nämlich der elektromotorische Antrieb 24 und eine geräteseitige Koppelstelle 25, einer Fluidzuleitung 29 der Getränkezubereitungsvorrichtung 22. Die Koppelstelle 25 ist passiv ausgebildet und wird nicht aktiv bewegt oder angetrieben. Der Antrieb 24 ist mit der Antriebsmechanik 05 der Brüheinheit 01 lösbar gekoppelt und bewirkt die Verstellung der nicht im Detail dargestellten Brühkammer, wie vorangehend beschrieben.

Fig. 8 zeigt in einer Draufsicht auf die eingesetzte Brüheinheit 01 die Kopplung zwischen der geräteseitigen Koppelstelle 25 und der Koppelstelle 26 der Brüheinheit 01. Die Kopplung mittels der Koppelstellen 25, 26 wird als Steckverbindung 27 ausgebildet, wobei die Kopplung permanent besteht, solange die Brüheinheit 01 in der Getränkezubereitungsvorrichtung 22 eingesetzt ist. Die Kopplung wird nicht abhängig von der Position der Brühkammer 03 in der Brüheinheit 01 hergestellt und gelöst. Der Antrieb 24 wirkt auf die nicht dargestellte Antriebsmechanik. Diese wirkt auf die Brühkammer 03, mit der die Koppelstelle 26 unbeweglich verbunden ist. Damit verursacht der Antrieb 24 die Bewegung der Koppelstelle 26, insbesondere entlang der Führung 28. Wenn die Brüheinheit 01 - zum Beispiel zu Reinigungszwecken - aus der Getränkezubereitungsvorrichtung 22 entnommen wird, wird die Kopplung der Koppelstellen 25, 26 gelöst.

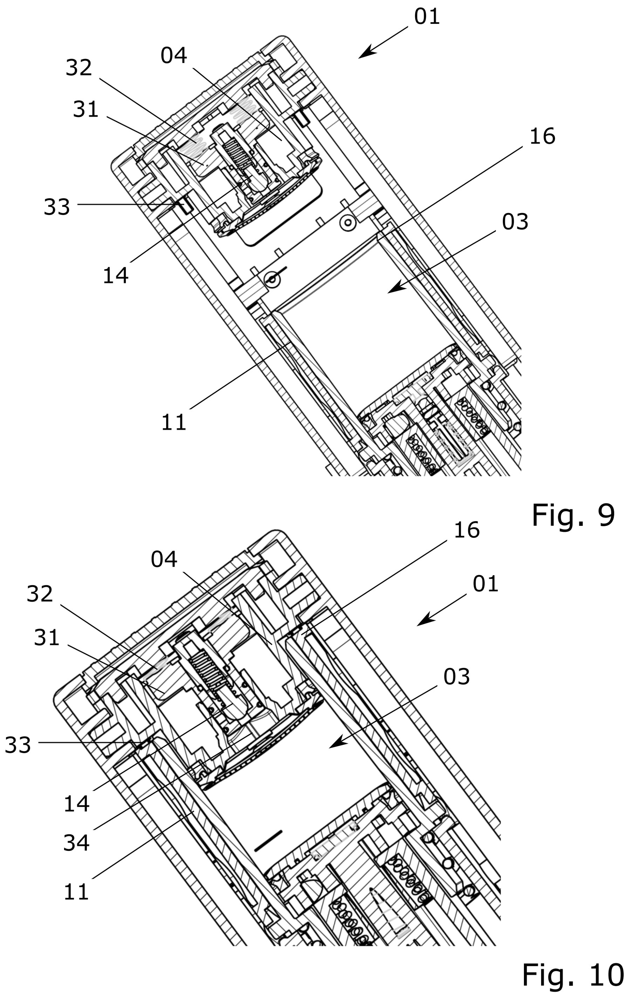

Die Fig. 9 zeigt einen Ausschnitt aus einer erfindungsgemäßen Brüheinheit 01 im Bereich des Brühkopfes 04. Es ist zu erkennen, dass das Auslassventil 14, welches als Gegendruckventil ausgebildet ist und als Cremaventil fungiert oder wirkt, in ein Aufnahmebauteil 31 aufgenommen ist. Das Aufnahmebauteil 31 ist über ein Rückstellmechanismus 32, bevorzugt Wendelfedern, auf die Brühkammer 03 zu vorgespannt und hält das Auslassventil 14 ohne äußere Einflüsse in einer Bypassstellung, in der das Auslassventil 14 über einen Umgehungskanal umgehbar ist. Das Aufnahmebauteil 31 ist mit seitlichen Mitnehmern 33 verbunden. Alternativ können die seitlichen Mitnehmer 33 auch einstückig, bevorzugt monolithisch mit dem Aufnahmebauteil 31 ausgebildet sein. Die Mitnehmer 33 übertragen dementsprechend eine Kraft auf den Rückstellmechanismus 32. Wenn eine Mindestkraft an den Mitnehmern 33 anliegt, führt dies dazu, dass das gesamte Aufnahmebauteil 31 mit samt des Auslassventils 14 angehoben wird. Dadurch schließt sich der Umgehungskanal am Auslassventil vorbei aus der Brühkammer 03 zum Auslauf 15 - in der Fig. 9 nicht im Detail dargestellt - und das Auslassventil 14 wird dadurch als Ventil, bevorzugt Gegendruckventil aktiviert. Die Mitnehmer 33 sind so positioniert, dass ein oberer Rand 16 der Brühkammerwand 11 durch eine Verstellung der Antriebsmechanik an den Mitnehmern 33 zur Anlage kommen kann und bei einer weiteren Verstellung der Brühkammer 03 gegenüber dem Brühkopf 04 die Rückstellkraft des Rückstellmechanismus 32 überwinden kann.

In der Fig. 10 ist dargestellt, wie die Brühkammer 03, insbesondere der obere Rand 16 der Brühkammerwand 11 die Mitnehmer 33 des Aufnahmebauteils 31 nicht nur kontaktiert sondern auch bereits verstellt hat. Der Rückstellmechanismus 32 ist dementsprechend komprimiert. Brühkammer 03, Aufnahmebauteil 31 und/oder das Auslassventil 14 sind in einer End- oder Anschlagsstellung/Anschlagsposition. Das Auslassventil 14 ist insgesamt zusammen mit dem Aufnahmebauteil 31 zurückversetzt und abgehoben worden, wodurch ein der Umgehungskanal verschlossen wird, der vom Inneren der Brühkammer 03 zu einem nicht dargestellten Auslauf führt. Das Auslassventil 14 ist folglich aktiviert und nicht länger umgehbar. Das Auslassventil öffnet erst beim Überschreiten eines Innendrucks oder Überdrucks in der Brühkammer 03.

Die Position der Brühkammer 03, wie in Fig. 10 dargestellt, wird dabei ausschließlich und allein durch die Antriebsmechanik der Brüheinheit 01 hergestellt oder verursacht. Dementsprechend ist die Position unabhängig von sonstigen Komponenten und Zuständen der Brüheinheit einstellbar oder erreichbar. Dies ermöglicht maximale Flexibilität und ermöglicht die Öffnung und den Verschluss des Umgehungskanals des Auslassventils 14 zu ansatzweise beliebigen Zeitpunkten oder Situationen während des Betriebs der Getränkezubereitungsvorrichtung.

Sobald die Antriebsmechanik die Brühkammer 03 wieder vom Brühkopf 04 entfernt, noch während die Brühkammerwand 11 dichtend am Brühkopf 04 anliegt, werden die Mitnehmer 33 mitsamt des Aufnahmebauteils 31 vom Rückstellmechanismus 32 wieder in Richtung der Brühkammer 03 verstellt in die Bypassstellung des Auslassventils vorgespannt. Dadurch wird der Umgehungskanal 34 wieder geöffnet.

### Bezugszeichen

- 01: Brüheinheit
- 02: Gehäuse
- 03: Brühkammer
- 04: Brühkopf
- 05: Antriebsmechanik
- 06: Brühkammerboden
- 07: Hydraulikzylinder
- 08: Gegendruckventil
- 09: Getränkesubstratmehl
- 10: Befüllöffnung
- 11: Brühkammerwand
- 12: Führung
- 13: Bereich des Hydraulikzylinders
- 14: Auslassventil
- 15: Auslauf
- 16: Rand
- 17: Auswerfer
- 18: Hebel
- 19: Bodenteil
- 20: Magnet
- 21: Innenoberfläche
- 22: Getränkezubereitungsvorrichtung
- 24: Antrieb
- 25: Koppelstelle der Getränkezubereitungsvorrichtung
- 26: Koppelstelle der Brüheinheit
- 27: Steckverbindung
- 28: Führung
- 29: Fluidzuleitung der Getränkezubereitungsvorrichtung
- 30: Anschlagfläche
- 31: Aufnahmebauteil
- 32: Rückstellmechanismus
- 33: Mitnehmer
- 34: Umgehungskanal

## Patentansprüche

1. Brüheinheit (01) für eine Getränkezubereitungsvorrichtung (22) , insbesondere einen Kaffee- und/oder Espressovollautomaten, mit einer Antriebsmechanik (05) zum Verschwenken und/oder linearen Verfahren einer Brühkammer (03) zwischen mehreren Positionen, wobei die Brühkammer (03) einen verschiebbar gegenüber einer Brühkammerwand (11) gelagerten Brühkammerboden (06) aufweist, wobei wenigstens ein Hydraulikzylinder (07) vorgesehen ist, der den Brühkammerboden (06) vor und/oder während der Getränkeherstellung in Richtung eines, die Brühkammer (03) verschließenden Brühkopfes (04) kraftbeaufschlagt, wobei die Antriebsmechanik (05) eingerichtet ist, um die Brühkammerwand (11) zur dichtenden Anlage am Brühkopf (04) zu bringen,
**dadurch gekennzeichnet,**
**dass** einem Auslassventil (14), bevorzugt einem Cremaventil, ein Umgehungskanal (34) zugeordnet ist, durch den Fluid das Auslassventil (14) umgehen kann, insbesondere ohne, dass das Auslassventil (14) in eine Öffnungsstellung überführt ist und das Auslassventil (14) in eine Bypassstellung vorgespannt ist, in der der Umgehungskanal (34) geöffnet ist.

2. Brüheinheit nach Anspruch 1,
**dadurch gekennzeichnet,**
**dass** die Antriebsmechanik (05) zum Erreichen einer Schließposition, bevorzugt einer ersten Spülposition der Brühkammer (03), eingerichtet ist, wobei in der Schließposition die Brühkammerwand (11) dichtend am Brühkopf (04) anliegt und ein Auslassventil (14), insbesondere ein Cremaventil, des Brühkopfes (04) über einen Umgehungskanal (34) umgehbar ist, sodass, insbesondere während einer Spülung der Brühkammer (03), kein Innendruck in der verschlossenen Brühkammer (03) aufbaubar ist.

3. Brüheinheit nach einem der vorangehenden Ansprüche,
**dadurch gekennzeichnet,**
**dass** die Antriebsmechanik (05) zur Verstellung der Brühkammer (03) in eine Brühposition eingerichtet ist, wobei die Antriebsmechanik (05) so ausgebildet ist, dass allein über die Antriebsmechanik (05), insbesondere ohne Verstellung der/des Hydraulikzylinder(s) (07) die Brühkammer (03), insbesondere die Brühkammerwand (11), zur dichtenden Anlage an dem Brühkopf (04) bringbar ist.

4. Brüheinheit nach Anspruch 3,
**dadurch gekennzeichnet,**
**dass** die Brühkammer (03), bevorzugt die Brühkammerwand (11), das Auslassventil (14), insbesondere aus der Bypassstellung, in eine geschlossene Position überführt und den Umgehungskanal schließt, wenn die Antriebmechanik (05) die Brühkammer (03) in die Brühposition, verstellt.

5. Brüheinheit nach einem der Ansprüche 3 oder 4,
**dadurch gekennzeichnet,**
**dass** beim Überführen der Brühkammer (03) in die Brühposition die Brühkammerwand (11), bevorzugt ein oberer Rand (16) der Brühkammerwand (11) einen unmittelbar mit dem Auslassventils (14) verbundenen Mitnehmer (33) verstellt, der wiederum das Auslassventil (14) gegen einen Rückstellmechanismus (32) , insbesondere aus der Bypassstellung, verstellt, wobei die Verstellung des Auslassventils den Umgehungskanal (34) verschließt.

6. Brüheinheit nach einem der vorangehenden Ansprüche,
**dadurch gekennzeichnet,**
**dass** in dem ersten Hydraulikzylinder (07) ein zweiter Hydraulikzylinder angeordnet ist, der zusammen mit dem ersten Hydraulikzylinder (07) eine teleskopartige Verstellung des Brühkammerbodens (06) ermöglicht, wobei die Hydraulikzylinder (07) gemeinsam eine Verstellung des Brühkammerbodens (06) bis zu einem oberen Rand (16) der Brühkammerwand (11) ermöglichen.

7. Brüheinheit nach einem der vorangehenden Ansprüche,
**dadurch gekennzeichnet,**
**dass** der erste Hydraulikzylinder (07) und/oder der zweite Hydraulikzylinder einen, bevorzugt gemeinsamen, Fluideinlass aufweisen, der fluidleitend mit einer Fluidzuleitung (29) der Getränkezubereitungsvorrichtung verbindbar ist, wobei die Hydraulikzylinder (07) mit einem ausgangsseiteigen Gegendruckventil (08) versehen sind, das in fluidleitender Verbindung mit der Brühkammer (03) ausgebildet ist, welches beim Überschreiten eines Grenzdrucks die Zufuhr von Brüh- oder Spülfluid in die Brühkammer (03) freigibt, sodass Brüh- oder Spülfluid aus dem/den Hydraulikzylinder(n) (07) abfließt und in die Brühkammer (03) einströmt.

8. Brüheinheit nach einem der vorangehenden Ansprüche,
**dadurch gekennzeichnet,**
**dass** der Fluideinlass unverzweigt mit einer Fluidzuleitung (29) einer Getränkezubereitungsvorrichtung verbunden ist.

9. Brüheinheit nach einem der vorangehenden Ansprüche,
**dadurch gekennzeichnet,**
**dass** während eines Spülens der Brühkammer (03) in einer ersten Spülposition der Brühkammer (03) der erste und/oder der zweite Hydraulikzylinder (07) befüllt sind und ein Abstand zwischen Brühkammerboden (06) und Brühkopf (04) minimiert ist, bevorzugt weniger als 2mm, besonders bevorzugt von weniger als 1mm, beträgt.

10. Brüheinheit nach einem der vorangehenden Ansprüche,
**dadurch gekennzeichnet,**
**dass** die Antriebsmechanik (05) zum Erreichen einer zweiten Spülposition der Brühkammer (03) eingerichtet ist, wobei in der zweiten Spülposition der Umgehungskanal (34) des Auslassventils (14), insbesondere des Cremaventils, des Brühkopfes (04) geschlossen ist und das Auslassventil (14) erst beim Überschreiten eines Grenzdrucks öffnet, sodass eine Spülung der Brühkammer (03) ermöglicht wird, gegen einen Innendruck der Brühkammer (03).

11. Getränkezubereitungsvorrichtung (22), insbesondere Kaffee- und/oder Espressovollautomat, mit einer, insbesondere entnehmbaren, Brüheinheit (01) und einem fest verbauten Antrieb (24) zum Antrieb (24) einer Antriebsmechanik (05) der Brüheinheit (01), wobei der Antrieb (24) Kopplungsmittel zum, bevorzugt lösbaren, Koppeln mit der Brüheinheit (01) umfasst,
**dadurch gekennzeichnet,**
**dass** die Brüheinheit (01) nach einem der Ansprüche 1 bis 10 ausgebildet ist.

12. Getränkezubereitungsvorrichtung nach Anspruch 11,
**dadurch gekennzeichnet**,
eine Fluidzuleitung (29) den Fluideinlass der Brüheinheit (01) mit dem einem Fluidtank, bevorzugt Wassertank, verbindet und keine Abzweigung zur Verbindung des Fluideinlasses der Brühkammer (03) aufweist.

13. Verfahren zum Betrieb einer Brüheinheit (01) für eine Getränkezubereitungsvorrichtung (22) insbesondere einen Kaffee- und/oder Espressovollautomaten, bei dem mit einer Antriebsmechanik (05) eine Brühkammer (03) zwischen mehreren Positionen verschwenkt und/oder linear verfahren wird, wobei die Brühkammer (03) einen verschiebbar gegenüber einer Brühkammerwand (11) gelagerten Brühkammerboden (06) aufweist, der während einer Getränkeherstellung in eine Tamperposition und zum Abschluss der Getränkeherstellung in eine Ausstoßposition verstellt wird, wobei ein, insbesondere erster, Hydraulikzylinder (07) vorgesehen ist, der den Brühkammerboden (06) vor und/oder während der Getränkeherstellung in Richtung eines, die Brühkammer (03) verschließenden Brühkopfes (04) kraftbeaufschlagt, wobei die Antriebsmechanik (05) zur Erreichung einer Brühposition und/oder Spülposition die Brühkammerwand (11) zur dichtenden Anlage am Brühkopf (04) bringt
**dadurch gekennzeichnet,**
**dass** einem Auslassventil (14), bevorzugt einem Cremaventil, ein Umgehungskanal (34) zugeordnet ist, durch den Fluid das Auslassventil (14) umgeht, insbesondere ohne, dass das Auslassventil (14) in eine Öffnungsstellung überführt wird, wobei das Auslassventil (14) in eine Bypassstellung vorgespannt wird, in der der Umgehungskanal (34) geöffnet ist und Fluid das Auslassventil umgeht.

14. Verfahren nach Anspruch 13,
**dadurch gekennzeichnet,**
**dass** in einem Zwischenspülverfahren, bevorzugt zwischen einzelnen Getränkeherstellungen, die Antriebsmechanik (05) die Brühkammer (03) in eine Schließposition, bevorzugt eine erste Spülposition, verstellt, wobei in der Schließposition, bevorzugt ersten Spülposition, die Brühkammerwand (11) dichtend am Brühkopf (04) anliegt und ein Auslassventil (14) insbesondere ein Cremaventil, des Brühkopfes (04) über einen Umgehungskanal (34) umgangen wird, sodass eine Spülung der Brühkammer (03) ermöglicht wird, ohne dass ein Innendruck in der Brühkammer (03) aufgebaut wird.

15. Verfahren nach Anspruch 13 oder 14,
**dadurch gekennzeichnet**,
das Fluid aus dem Hydraulikzylinder (07) ausschließlich in eine Fluidzuleitung (29) der Getränkezubereitungsvorrichtung abgelassen werden kann, wozu ein Fluideinlass der Brüheinheit (01) unverzweigt mit einer Fluidzuleitung der Getränkezubereitungsvorrichtung (22) verbunden ist.

16. Verfahren nach einem der Ansprüch 13 bis 15,
**dadurch gekennzeichnet,**
**dass** in dem ersten Hydraulikzylinder (07) ein zweiter Hydraulikzylinder angeordnet ist, wobei der zweite Hydraulikzylinder zusammen mit dem ersten Hydraulikzylinder (07) teleskopartig verstellt wird und eine Verstellung des Brühkammerbodens (06) bewirkt, so dass die Hydraulikzylinder (07) gemeinsam den Brühkammerboden (06) bis zu einem oberen Rand (16) der Brühkammerwand (11) in eine Ausstoßposition verstellen.

17. Verfahren nach einem der Ansprüche 13 bis 16,
**dadurch gekennzeichnet,**
**dass** mittels der Antriebsmechanik (05) die Brühkammer (03) in eine Brühposition verstellt wird, insbesondere bevor der Brühkammerboden (06) in die Tamperposition verstellt wird, wobei die Antriebsmechanik (05) allein, insbesondere ohne eine Verstellung der/des Hydraulikzylinders (07), die Brühkammer (03), insbesondere die Brühkammerwand (11) den Umgehungskanal schließt und das Auslassventil (14) erst beim Überschreiten eines Grenzdrucks öffnet.

18. Verfahren nach einem der Ansprüche 13 bis 17,
**dadurch gekennzeichnet,**
**dass** der zweite Hydraulikzylinder aktiviert wird, wenn der erste Hydraulikzylinder (07) einen zugeordneten Anschlag erreicht, der den Hub des ersten Hydraulikzylinders (07) begrenzt und der Innendruck in den Hydraulikzylindern (07) weiter steigt.

19. Verfahren nach einem der Ansprüche 13 bis 18,
**dadurch gekennzeichnet,**
**dass** in einem Aufheizspülverfahren, bevorzugt nach einem Einschalten der Getränkezubereitungsvorrichtung (22), die Antriebsmechanik (05) die Brühkammer (03) in eine zweite Spülposition verstellt, wobei in der zweiten Spülposition der Umgehungskanal des Ausalssventils (14) geschlossen ist und das Auslassventil (14), insbesondere ein Cremaventil, des Brühkopfes (04) erst beim Überschreiten eines Grenzdrucks öffnet, sodass eine Spülung der Brühkammer (03) gegen einen Innendruck der Brühkammer (03) durchgeführt wird.
